(19) Europäisches Patentamt
European Patent Office
Office européen des brevets

(11) **EP 3 791 387 B1**

(12) **EUROPEAN PATENT SPECIFICATION**

(45) Date of publication and mention
of the grant of the patent:
**30.08.2023 Bulletin 2023/35**

(21) Application number: **19799947.7**

(22) Date of filing: **07.05.2019**

(51) International Patent Classification (IPC):
**G10L 15/22** *(2006.01)*    **G06F 3/01** *(2006.01)*
**G06N 3/08** *(2023.01)*    *G10L 15/183* *(2013.01)*

(52) Cooperative Patent Classification (CPC):
**G06N 3/08; G06F 3/015; G10L 15/22;**
G10L 15/183; G10L 2015/227

(86) International application number:
**PCT/US2019/031114**

(87) International publication number:
**WO 2019/217419 (14.11.2019 Gazette 2019/46)**

(54) **SYSTEMS AND METHODS FOR IMPROVED SPEECH RECOGNITION USING NEUROMUSCULAR INFORMATION**

SYSTEME UND VERFAHREN ZUR VERBESSERTEN SPRACHERKENNUNG UNTER VERWENDUNG NEUROMUSKULÄRER INFORMATIONEN

SYSTÈMES ET PROCÉDÉS POUR RECONNAISSANCE DE LA PAROLE AMÉLIORÉE À L'AIDE D'INFORMATIONS NEUROMUSCULAIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.05.2018 US 201815974454
08.05.2018 US 201815974384
08.05.2018 US 201815974430**

(43) Date of publication of application:
**17.03.2021 Bulletin 2021/11**

(73) Proprietor: **Facebook Technologies, LLC.
Menlo Park, CA 94025 (US)**

(72) Inventors:
• **BERENZWEIG, Adam
New York, NY 10018 (US)**
• **KAIFOSH, Patrick
New York, NY 10018 (US)**
• **DU, Alan, Huan
New York, NY 10018 (US)**
• **SEELY, Jeffrey, Scott
New York, NY 10018 (US)**
• **WETMORE, Daniel
New York, NY 10018 (US)**

(74) Representative: **Murgitroyd & Company
Murgitroyd House
165-169 Scotland Street
Glasgow G5 8PL (GB)**

(56) References cited:
EP-A2- 1 345 210     WO-A1-2014/130871
WO-A1-2015/100172    KR-A- 20170 107 283
US-A1- 2011 313 762    US-A1- 2016 207 201
US-B2- 9 182 826     US-B2- 9 182 826

• JAMES CANNAN ET AL: "A wearable sensor fusion armband for simple motion control and selection for disabled and non-disabled users", COMPUTER SCIENCE AND ELECTRONIC ENGINEERING CONFERENCE (CEEC), 2012 4TH, IEEE, 12 September 2012 (2012-09-12), pages 216-219, XP032276745, DOI: 10.1109/CEEC.2012.6375408 ISBN: 978-1-4673-2665-0
• FRANCISCO J. VALERO-CUEVAS et al.: "Computational Models for Neuromuscular Function", , 16 June 2011 (2011-06-16), XP011285637, Retrieved from the Internet: URL:https://www.ncbi.nlm.nih.gov/pmc/artic les/PMC3116649 [retrieved on 2019-07-29]

**Description**

BACKGROUND

Automated speech recognition systems transform recorded audio including speech into recognized text. The speech recognition systems convert the input audio into text using one or more acoustic or language models that represent the mapping from audio input to text output using language-based constructs such as phonemes, syllables, or words. The models used for speech recognition may be speaker independent or speaker dependent and may be trained or refined for use by a particular user as the user uses the system and feedback is provided to retrain the models. Increased usage of the system by the particular user typically results in improvements to the accuracy and/or speed by which the system is able to produce speech recognition results as the system learns the user's speech characteristics and style.

Patent documents US 9 182 826B2 and WO 2015/100172 A1 disclose systems for speech recognition with instructions for modifying the operation of the speech recognizer based on gesture recognition.

SUMMARY

Systems and methods are described herein for providing an improved speech recognition system in which speech data provided as input to the system is augmented with neuromuscular signals (e.g., recorded using electromyography (EMG)). The improved speech recognition system may exhibit better performance (e.g., accuracy, speed) compared to speech recognition systems that receive only speech data as input. For example, a musculoskeletal representation (including, but not limited to, body position information and biophysical quantities such as motor unit and muscle activation levels and forces) determined based on the neuromuscular signals may encode contextual information represented in a user's movements or activation of their muscles, that may be used to enhance speech recognition performance. In another example, the described systems and methods may interpret parts of speech from the user's movements or activations to enhance speech recognition performance. The described systems and methods provide for modifying an operation of a speech recognition system (e.g., by enabling and disabling speech recognition with a wake word/phrase or gesture, applying formatting such as bold, italics, underline, indent, etc., entering punctuation, and other suitable modifications). In some embodiments, the described systems and methods provide for using recognized neuromuscular information, e.g., for one or more gestures, to change an interaction mode (e.g., dictation, spelling, editing, navigation, or another suitable mode) with the speech recognition system or speech recognizer. In some embodiments, the described systems and methods provide for using EMG-based approaches (e.g. EMG-based scrolling and clicking) to select text for editing, error corrections, copying, pasting, or another suitable purpose. In some embodiments, the described systems and methods provide for selection of options from list of choices, e.g., with audio feedback for "eyes-busy" situations like driving ("did you mean X or Y?"). In some embodiments, the described systems and methods provide for a hybrid neuromuscular/speech input that gracefully switches from one mode to the other, and uses both modes when available to increase accuracy and speed. In some embodiments, the described systems and methods provide for text input using a linguistic token, such as phonemes, characters, syllables, words, sentences, or another suitable linguistic token, as the basic unit of recognition.

According to the present invention there is provided a computerized system for using neuromuscular information to improve speech recognition in accordance with claim 1.

In at least one aspect, the computerized system further comprises a communications interface configured to provide the at least one instruction from the at least one computer processor to the speech recognizer, wherein the at least one computer processor is programmed to execute the speech recognizer.

In at least one aspect, the operation of the speech recognizer comprises selecting at least a portion of text output by the speech recognizer, modifying the at least a portion of text output by the speech recognizer, or altering a mode of the speech recognizer.

In at least one aspect, modifying the at least a portion of text output by the speech recognizer comprises modifying a punctuation, a spelling, and/or a formatting of the at least a portion of text output by the speech recognizer.

In at least one aspect, altering the mode of the speech recognizer comprises altering a language mode or a caps lock mode of the speech recognizer.

In at least one aspect, the musculoskeletal representation relates to a time subsequent to text being output by the speech recognizer.

In at least one aspect, the musculoskeletal representation corresponds to a selection of at least a portion of the text output by the speech recognizer.

In at least one aspect, the musculoskeletal representation relates to substantially a same time as audio input being provided to the speech recognizer.

In at least one aspect, the musculoskeletal representation corresponds to a modification of at least a portion of text output by the speech recognizer based on the audio input.

In at least one aspect, the musculoskeletal representation relates to a time prior to or subsequent to audio input being provided to the speech recognizer.

In at least one aspect, the musculoskeletal representation corresponds to altering a mode of the speech recognizer.

According to the present invention there is provided a computer implemented method for using neuromuscular information to improve speech recognition in accordance with claim 7.

In at least one aspect, the method further comprises providing, using a communications interface, the at least one instruction from the at least one computer processor to the speech recognizer, wherein the at least one computer processor is programmed to execute the speech recognizer.

In at least one aspect, the operation of the speech recognizer comprises selecting at least a portion of text output by the speech recognizer, modifying the at least a portion of text output by the speech recognizer, or altering a mode of the speech recognizer.

In at least one aspect, modifying the at least a portion of text output by the speech recognizer comprises modifying a punctuation, a spelling, and/or a formatting of the at least a portion of text output by the speech recognizer.

In at least one aspect, altering the mode of the speech recognizer comprises altering a language mode or a caps lock mode of the speech recognizer.

In at least one aspect, the musculoskeletal representation relates to a time subsequent to text being output by the speech recognizer.

In at least one aspect, the musculoskeletal representation corresponds to a selection of at least a portion of the text output by the speech recognizer.

In at least one aspect, the musculoskeletal representation relates to substantially a same time as audio input being provided to the speech recognizer.

In at least one aspect, the musculoskeletal representation corresponds to a modification of at least a portion of text output by the speech recognizer based on the audio input.

In at least one aspect, the musculoskeletal representation relates to a time prior to or subsequent to audio input being provided to the speech recognizer.

In at least one aspect, the musculoskeletal representation corresponds to altering a mode of the speech recognizer.

The system optionally further includes at least one storage device configured to store one or more trained inference models for determining text based on the audio input and the plurality of neuromuscular signals. The system optionally further includes at least one input interface configured to receive the audio input and at least one computer processor. The computer processor is optionally programmed to obtain the audio input from the input interface and obtain the plurality of neuromuscular signals from the plurality of neuromuscular sensors. The computer processor is further optionally programmed to provide as input to the one or more trained statistical models, the audio input and the plurality of neuromuscular signals or signals derived from the plurality of neuromuscular signals. The computer processor is further optionally programmed to determine the text based, at least in part, on an output of the one or more trained statistical models.

In at least one aspect, both the audio input and the plurality of neuromuscular signals are provided as input to the one or more trained statistical models.

In at least one aspect, at a first time, the audio input is provided as input to the one or more trained inference models, and wherein, at a second time different from the first time, the plurality of neuromuscular signals is provided as input to the one or more trained statistical models.

In at least one aspect, the first time is prior to or subsequent to the second time.

In at least one aspect, determining the text comprises determining a first portion of the text corresponding to the audio input based, at least in part, on a first output of the one or more trained statistical models and determining a second portion of the text corresponding to the plurality of neuromuscular signals based, at least in part, on a second output of the one or more trained statistical models.

In at least one aspect, the one or more trained statistical models comprises a first trained statistical model for determining the text based on the audio input and a second trained statistical model for determining the text based on the plurality of neuromuscular signals.

In at least one aspect, determining the text comprises determining at least a first portion of the text based on a first output of the first trained statistical model.

In at least one aspect, determining the text further comprises determining at least a second portion of the text based on a second output of the second trained statistical model.

In at least one aspect, the first portion and the second portion are overlapping.

In at least one aspect, the first portion and the second portion are non-overlapping.

Optionally the method comprises obtaining, from an input interface, audio input. The method optionally comprises providing, using at least one computer processor, as input to one or more trained statistical models, the audio input and/or the plurality of neuromuscular signals or signals derived from the plurality of neuromuscular signals. The method optionally comprises determining, using the at least one computer processor, based, at least in part, on an output of the one or more trained inference models, the text.

In at least one aspect, both the audio input and the plurality of neuromuscular signals are provided as input to the one or more trained statistical models.

In at least one aspect, at a first time, the audio input is provided as input to the one or more trained statistical models, and wherein, at a second time different from the first time, the plurality of neuromuscular signals is provided as input to the one or more trained statisticalmodels.

In at least one aspect, the first time is prior to or subsequent to the second time.

In at least one aspect, determining the text comprises determining a first portion of the text corresponding to the audio input based, at least in part, on a first output of the one or more trained statisticalmodels and determining a second portion of the text corresponding to the plurality of neuromuscular signals based, at least in part, on a second output of the one or more trained statisticalmodels.

In at least one aspect, the one or more trained statisticalmodels comprises a first trained statisticalmodel for determining the text based on the audio input and a second trained statisticalmodel for determining the text based on the plurality of neuromuscular signals.

In at least one aspect, determining the text comprises determining at least a first portion of the text based on a first output of the first trained statisticalmodel.

In at least one aspect, determining the text further comprises determining at least a second portion of the text based on a second output of the second trained statisticalmodel.

In at least one aspect, the first portion and the second portion are overlapping.

In at least one aspect, the first portion and the second portion are non-overlapping.

BRIEF DESCRIPTION OF DRAWINGS

Various non-limiting embodiments of the technology will be described with reference to the following figures. It should be appreciated that the figures are not necessarily drawn to scale.

FIG. 1 is a schematic diagram of a computer-based system for using neuromuscular information to improve speech recognition in accordance with some embodiments of the technology described herein;

FIG. 2 is a flowchart of an illustrative process for using neuromuscular information to improve speech recognition, in accordance with some embodiments of the technology described herein;

FIG. 3 is a flowchart of another illustrative process for using neuromuscular information to improve speech recognition, in accordance with some embodiments of the technology described herein;

FIG. 4 is a flowchart of yet another illustrative process for using neuromuscular information to improve speech recognition, in accordance with some embodiments of the technology described herein;

FIG. 5 is a flowchart of an illustrative process for using neuromuscular information to improve speech recognition in accordance with some embodiments of the technology described herein;

FIG. 6 illustrates a wristband/armband having EMG sensors arranged circumferentially thereon, in accordance with some embodiments of the technology described herein;

FIG. 7 illustrates a user wearing the wristband/armband of FIG. 6 while typing on a keyboard, in accordance with some embodiments of the technology described herein;

FIG. 8 is a schematic diagram of an illustrative vocal tract model in accordance with some embodiments of the technology described herein;

FIG. 9 is a flowchart of an illustrative process for using positive reinforcement from a user to update a trained inference model in accordance with some embodiments of the technology described herein;

FIG. 10 is a flowchart of an illustrative process for using negative reinforcement from a user to update a trained inference model in accordance with some embodiments of the technology described herein;

FIG. 11A illustrates a wearable system with sixteen EMG sensors arranged circumferentially around an elastic band configured to be worn around a user's lower arm or wrist, in accordance with some embodiments of the technology described herein;

FIG. 11B is a cross-sectional view through one of the sixteen EMG sensors illustrated in FIG. 11A; and

FIGS. 12A and 12B schematically illustrate components of a computer-based system on which some embodiments are implemented. FIG. 12A illustrates a wearable portion of the computer-based system and FIG. 12B illustrates a dongle portion connected to a computer, wherein the dongle portion is configured to communicate with the wearable portion.

DETAILED DESCRIPTION

Automated speech recognition (ASR) is a computer-implemented process for converting speech to text using mappings between acoustic features extracted from input speech and language-based representations such as phonemes. Some ASR systems take as input, information other than speech to improve the performance of the ASR system. For example, an ASR system may take as input both visual information (e.g., images of a user's face) and audio information (e.g., speech) and may determine a speech recognition result based one or both of the types of inputs.

The inventors have recognized and appreciated that existing techniques for performing speech recognition may be improved by using musculoskeletal information about the position, forces, and/or movement of a user's body (including, but not limited to, the user's arm, wrist, hand, neck, throat, tongue, or face) derived from recorded neuromuscular signals to augment the analysis of received audio when performing speech recognition.

The human musculoskeletal system can be modeled as a multi-segment articulated rigid body system, with joints forming the interfaces between the different segments and joint angles defining the spatial relationships between connected segments in the model. Constraints on the movement at the joints are governed by the type of joint connecting the segments and the biological structures (e.g., muscles, tendons, ligaments) that restrict the range of movement at the joint. For example, the shoulder joint connecting the upper arm to the torso and the hip j oint connecting the upper leg to the torso are ball and socket joints that permit extension and flexion movements as well as rotational movements. By contrast, the elbow joint connecting the upper arm and the forearm and the knee joint connecting the upper leg and the lower leg allow for a more limited range of motion. As described herein, a multi-segment articulated rigid body system is used to model the human musculoskeletal system. However, it should be appreciated that some segments of the human musculoskeletal system (e.g., the forearm), though approximated as a rigid body in the articulated rigid body system, may include multiple rigid structures (e.g., the ulna and radius bones of the forearm) that provide for more complex movement within the segment that is not explicitly considered by the rigid body model. Accordingly, a model of an articulated rigid body system for use with some embodiments of the technology described herein may include segments that represent a combination of body parts that are not strictly rigid bodies.

In kinematics, rigid bodies are objects that exhibit various attributes of motion (e.g., position, orientation, angular velocity, acceleration). Knowing the motion attributes of one segment of the rigid body enables the motion attributes for other segments of the rigid body to be determined based on constraints in how the segments are connected. For example, the arm may be modeled as a two-segment articulated rigid body with an upper portion corresponding to the upper arm connected at a shoulder joint to the torso of the body and a lower portion corresponding to the forearm, wherein the two segments are connected at the elbow joint. As another example, the hand may be modeled as a multi-segment articulated body with the joints in the wrist and each finger forming the interfaces between the multiple segments in the model. In some embodiments, movements of the segments in the rigid body model can be simulated as an articulated rigid body system in which orientation and position information of a segment relative to other segments in the model are predicted using a trained inference model, as described in more detail below.

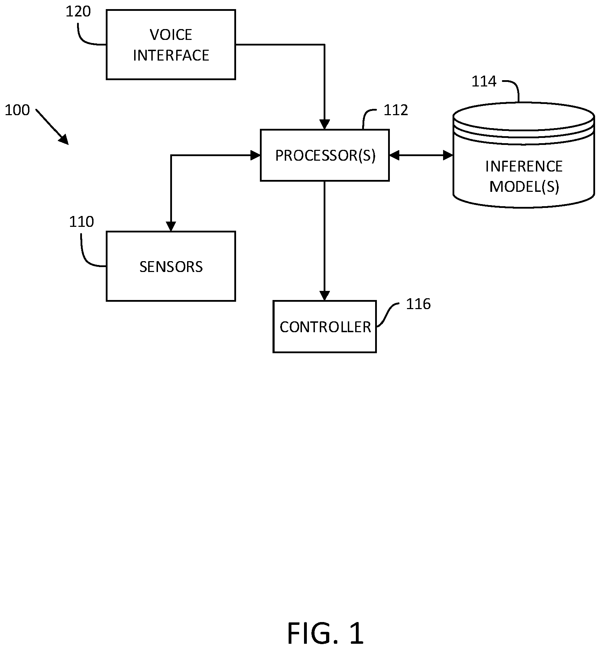

FIG. 1 illustrates a system 100 in accordance with some embodiments. The system includes a plurality of autonomous sensors 110 configured to record signals resulting from the movement of portions of a human body (including, but not limited to, the user's arm, wrist, hand, neck, throat, tongue, or face). As used herein, the term "autonomous sensors" refers to sensors configured to measure the movement of body segments without requiring the use of external sensors, examples of which include, but are not limited to, cameras or global positioning systems. Autonomous sensors 110 may include one or more Inertial Measurement Units (IMUs), which measure a combination of physical aspects of motion, using, for example, an accelerometer and a gyroscope. In some embodiments, IMUs may be used to sense information about the movement of the part of the body on which the IMU is attached and information derived from the sensed data (e.g., position and/or orientation information) may be tracked as the user moves over time. For example, one or more IMUs may be used to track movements of portions of a user's body proximal to the user's torso (e.g., arms, legs) as the user moves over time.

According to the invention, autonomous sensors 110 include a plurality of neuromuscular sensors configured to record signals arising from neuromuscular activity in skeletal muscle of a human body. The term "neuromuscular activity" as used herein refers to neural activation of spinal motor neurons that innervate a muscle, muscle activation, muscle contraction, or any combination of the neural activation, muscle activation, and muscle contraction. Neuromuscular sensors may include one or more electromyography (EMG) sensors, one or more mechanomyography (MMG) sensors, electrical impedance tomography (EIT) sensors, one or more sonomyography (SMG) sensors, and/or one or more sensors of any suitable type that are configured to detect neuromuscular signals. The plurality of neuromuscular sensors are used to sense muscular activity related to a movement of the part of the body controlled by muscles from which the neuromuscular sensors are arranged to sense the muscle activity. Spatial information (e.g., position and/or orientation information) describing the movement (e.g., for portions of the user's body distal to the user's torso, such as hands and feet) may be predicted based on the sensed neuromuscular signals as the user moves over time.

In embodiments that include at least one IMU and a plurality of neuromuscular sensors, the IMU(s) and neuromuscular sensors may be arranged to detect movement, force, pose, gesture, and/or activation of different parts of the human body (including, but not limited to, the user's arm, wrist, hand, neck, throat, tongue, or face). For example, the IMU(s) may be arranged to detect movements of one or more body segments proximal to the torso, whereas the neuromuscular sensors may be arranged to detect movements of one or more body segments distal to the torso. It should be appreciated, however, that autonomous sensors 110 may be arranged in any suitable way, and embodiments of the technology described herein are not limited based on the particular sensor arrangement. For example, in some embodiments, at least one IMU and a plurality of neuromuscular sensors may be co-located on a body segment to track movements of body segment using different types of measurements. In an example not part of the invention, an IMU sensor and a plurality of EMG sensors are arranged on a wearable device configured to be worn around the user's neck and/or proximate to the user's face. In an aspect of the invention described in more detail below, an IMU sensor and a plurality of EMG sensors are arranged on a wearable device configured to be worn around the lower arm or wrist of a user. In such an arrangement, the IMU sensor may be configured to track movement or activation information (e.g., positioning and/or orientation over time) associated with one or more arm segments, to determine, for example whether the user has raised or lowered their arm, whereas the EMG sensors is configured to determine movement or activation information associated with wrist or hand segments to determine, for example, whether the user has an open or closed hand configuration.

Each of autonomous sensors 110 includes one or more sensing components configured to sense movement, force, pose gesture, and/or activation information from the user. The movement or activation sensed by the autonomous sensors 110 may correspond to muscle activation at a fixed point in time (e.g., the user making a thumbs up pose or tensing arm muscles) or may correspond to the user performing a movement over a period of time (e.g., the user moving their arm in an arc). The autonomous sensors 110 may sense movement information when the user performs a movement, such as a gesture, a movement of a portion of the user's body (including, but not limited to, the user's arm, wrist, hand, neck, throat, tongue, or face), or another suitable movement, force, pose, gesture, and/or activation. The autonomous sensors 110 may sense activation information when the user performs an activation, such as forces applied to external objects without movement, balanced forces (co-contraction), activation of individual muscle fibers (e.g., muscle fibers too weak to cause noticeable movement), or another suitable activation. In the case of IMUs, the sensing components may include one or more accelerometers, gyroscopes, magnetometers, or any combination thereof to measure characteristics of body motion, examples of which include, but are not limited to, acceleration, angular velocity, and sensed magnetic field around the body. In the case of neuromuscular sensors, the sensing components may include, but are not limited to, electrodes configured to detect electric potentials on the surface of the body (e.g., for EMG sensors) vibration sensors configured to measure skin surface vibrations (e.g., for MMG sensors), and acoustic sensing components configured to measure ultrasound signals (e.g., for SMG sensors) arising from muscle activity.

In some embodiments, the output of one or more of the sensing components may be processed using hardware signal processing circuitry (e.g., to perform amplification, filtering, and/or rectification). In other embodiments, at least some signal processing of the output of the sensing components may be performed in software. Thus, signal processing of autonomous signals recorded by autonomous sensors 110 may be performed in hardware, software, or by any suitable combination of hardware and software, as aspects of the technology described herein are not limited in this respect.

In some embodiments, the recorded sensor data may be processed to compute additional derived measurements that are then provided as input to an inference model, as described in more detail below. For example, recorded signals from an IMU sensor may be processed to derive an orientation signal that specifies the orientation of a rigid body segment over time. Autonomous sensors 110 may implement signal processing using components integrated with the sensing components, or at least a portion of the signal processing may be performed by one or more components in communication with, but not directly integrated with the sensing components of the autonomous sensors.

In some embodiments, at least some of the plurality of autonomous sensors 110 are arranged as a portion of a wearable device configured to be worn on or around part of a user's body. For example, in one non-limiting example, an IMU sensor and a plurality of neuromuscular sensors are arranged circumferentially around an adjustable and/or elastic band such as a wristband or armband configured to be worn around a user's wrist or arm. Alternatively or additionally, at least some of the autonomous sensors may be arranged on a wearable patch configured to be affixed to a portion of the user's body.

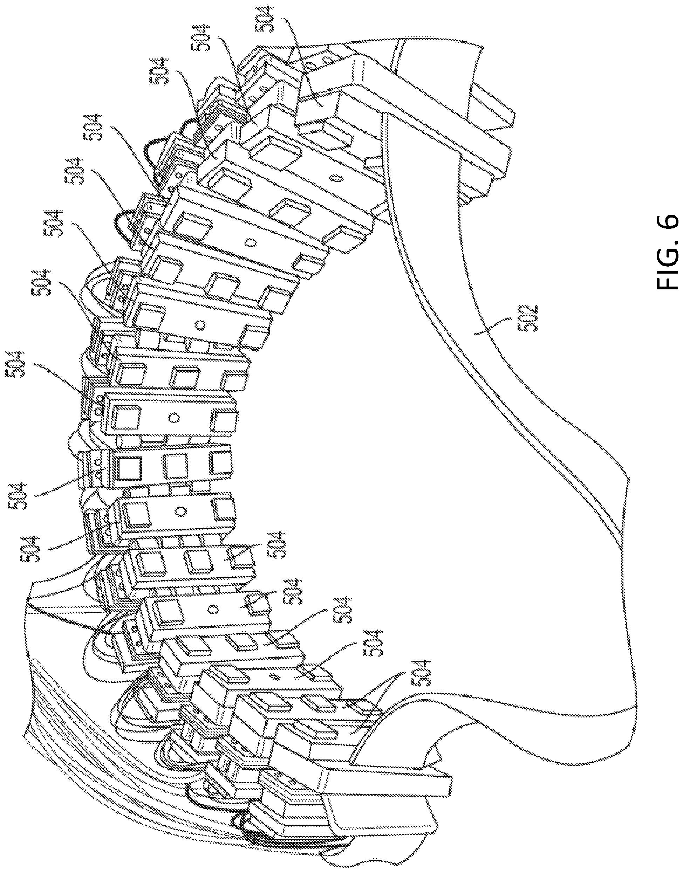

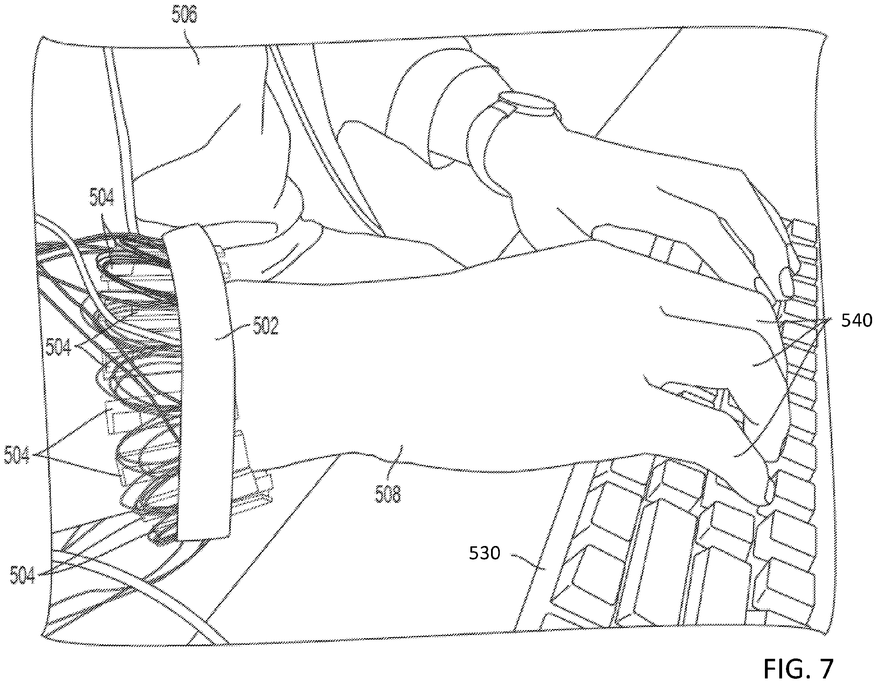

In one implementation, 16 EMG sensors are arranged circumferentially around an elastic band configured to be worn around a user's lower arm. For example, FIG. 6 shows EMG sensors 504 arranged circumferentially around elastic band 502. It should be appreciated that any suitable number of neuromuscular sensors may be used and the number and arrangement of neuromuscular sensors used may depend on the particular application for which the wearable device is used. For example, a wearable armband or wristband may be used to predict musculoskeletal position information for hand-based motor tasks, whereas a wearable leg or ankle band may be used to predict musculoskeletal position information for foot-based motor tasks. For example, as shown in FIG. 7, a user 506 may be wearing elastic band 502 on hand 508. In this way, EMG sensors 504 may be configured to record EMG signals as a user controls keyboard 510 using fingers 512. In some embodiments, elastic band 502 may also include one or more IMUs (not shown), configured to record movement or activation information, as discussed above.

In some embodiments, multiple wearable devices, each having one or more IMUs and/or neuromuscular sensors included thereon may be used to predict musculoskeletal position information for movements that involve multiple parts of the body. For example, a wearable device may be worn on each arm or wrist to record neuromuscular signals bilaterally.

System 100 also includes voice interface 120 configured to receive audio input. For example, voice interface 120 may include a microphone that, when activated, receives speech data, and processor(s) 112 may perform automatic speech recognition (ASR) based on the speech data. Audio input including speech data may be processed by an ASR system, which converts audio input to recognized text. The received speech data may be stored in a datastore (e.g., local or remote storage) associated with system 100 to facilitate the ASR processing. In some embodiments, ASR processing may be performed in whole or in part by one or more computers (e.g., a server) remotely located from voice interface 120. For example, in some embodiments, speech recognition may be performed locally using an embedded ASR engine associated with voice interface 120, a remote ASR engine in network communication with voice interface 120 via one or more networks, or speech recognition may be performed using a distributed ASR system including both embedded and remote components. Additionally, it should be appreciated that computing resources used in accordance with the ASR engine may also be located remotely from voice interface 120 to facilitate the ASR processing described herein, as aspects of the invention related to ASR processing are not limited in any way based on the particular implementation or arrangement of these components within system 100.

System 100 also includes one or more computer processor(s) 112 programmed to communicate with autonomous sensors 110 and/or voice interface 120. For example, signals recorded by one or more of the autonomous sensors 110 may be provided to processor(s) 112, which may be programmed to perform signal processing, non-limiting examples of which are described above. In another example, speech data recorded by voice interface 120 may be provided to processor(s) 112, which may be programmed to perform automatic speech recognition, non-limiting examples of which are described above. Processor(s) 112 may be implemented in hardware, firmware, software, or any combination thereof. Additionally, processor(s) 112 may be co-located on a same wearable device as one or more of the autonomous sensors or the voice interface or may be at least partially located remotely (e.g., processing may occur on one or more network-connected processors).

System 100 also includes datastore 114 in communication with processor(s) 112. Datastore 114 may include one or more storage devices configured to store information describing an inference model used for predicting musculoskeletal position information based on signals recorded by autonomous sensors 110 in accordance with some embodiments. In some implementations, the inference model(s) can include one or more statistical models, one or more machine learning models, and/or a combination of one or more statistical model(s) and/or one or more machine learning model(s). Processor(s) 112 may be configured to execute one or more machine learning techniques to process signals output by the autonomous sensors 110 to train an inference model stored in datastore 114, and the trained (or retrained) inference model may be stored in datastore 114 for later use in generating a musculoskeletal representation. Non-limiting examples of inference models that may be used in accordance with some embodiments to predict musculoskeletal position information based on recorded signals from autonomous sensors are discussed in more detail below.

In some embodiments, processor(s) 112 may be configured to execute one or more machine learning techniques to process signals output by the autonomous sensors 110 to train an inference model stored in datastore 114, and the trained (or retrained) inference model may be stored in datastore 114 for later use in generating an intermediate representation. The intermediate representation may represent a dimensional space for mapping signals output by the autonomous sensors 110 to one or more dimensions in that space. For example, the intermediate representation may be a representation in an embedding space. An embedding space may be defined as an n-dimensional space in which input data, having greater than n dimensions, can be mapped to the n-dimensional space. As such, the dimensionality of the embedding space is lower that than of the input data. The trained inference model may map signals output by the autonomous sensors 110 to one or more dimensions in the embedding space. In another example, the intermediate representation may be the musculoskeletal representation. In some embodiments, the intermediate representation may include, for example, a set of parameters, e.g., musculoskeletal representation parameters (e.g., joint angles, forces), vocal tract parameters (e.g., dimensions/shapes of segments), etc. In some embodiments, multiple intermediate representations with associated inference models may be used. For example, a first inference model may process at least some of the autonomous signals as input to provide as output a first intermediate representation, a second inference model receive as input, the output of the first intermediate representation and provide as output a second intermediate representation, and so on.

In some embodiments, a set of training data, including sensor data from the autonomous sensors 110 and optionally speech data from the voice interface 120, is obtained for training the inference model. This training data may also be referred to as ground truth data. The training data may be obtained by prompting the user at certain times to perform a movement or activation and capturing the corresponding sensor data and/or speech data. Alternatively or additionally, the training data may be captured when the user is using a device, such as a keyboard. For example, the captured training data may include the user's EMG signal data and the user's corresponding key presses from a key logger. Alternatively or additionally, the training data may include ground truth joint angles corresponding to the user's movement or activation. The ground truth joint angles may be captured using, e.g., a camera device, while the user performs the movement or activation. Alternatively or additionally, the training data may include sensor data corresponding to a movement or activation performed by the user and annotated with speech data corresponding to the user speaking at the same time as performing the movement or activation. For example, the user may perform a gesture or a pose, such as a thumbs up pose, and speak a word, such as "edit," to indicate that the gesture relates to an edit function. Alternatively or additionally, the training data may be captured when the user is using a writing implement or instrument, such as a pen, a pencil, a stylus, or another suitable writing implement or instrument. For example, the captured training data may include EMG signal data recorded when the user is prompted to write one or more characters, words, shorthand symbols, and/or another suitable written input using a pen. Optionally, the motion of the writing implement or instrument may be recorded as the user writes. For example, an electronic stylus (or another device configured to record motion) may record motion of the electronic stylus as the user writes a prompted word using the electronic stylus. Accordingly, the captured training data may include recorded EMG signal data and the corresponding recorded motion of the writing implement or instrument as the user writes one or more letters, words, shorthand symbols, and/or another suitable written input using the writing implement or instrument.

In some embodiments, processor(s) 112 may be configured to communicate with one or more of autonomous sensors 110, for example, to calibrate the sensors prior to measurement of movement or activation information. For example, a wearable device may be positioned in different orientations on or around a part of a user's body and calibration may be performed to determine the orientation of the wearable device and/or to perform any other suitable calibration tasks. Calibration of autonomous sensors 110 may be performed in any suitable way, and embodiments are not limited in this respect. For example, in some embodiments, a user may be instructed to perform a particular sequence of movements or activations and the recorded movement or activation information may be matched to a template by virtually rotating and/or scaling the signals detected by the sensors (e.g., by the electrodes on EMG sensors). In some embodiments, calibration may involve changing the gain(s) of one or more analog to digital converters (ADCs), for example, in the case that the signals detected by the sensors result in saturation of the ADCs.

System 100 optionally includes one or more controllers 116 configured to receive a control signal based, at least in part, on processing by processor(s) 112. As discussed in more detail below, processor(s) 112 may implement one or more trained inference models 114 configured to predict musculoskeletal position information based, at least in part, on signals recorded by autonomous sensors 110 worn by a user. One or more control signals determined based on the output of the trained inference model(s) may be sent to controller 116 to control one or more operations of a device associated with the controller. In some embodiments, system 100 does not include one or more controllers configured to control a device. In such embodiments, data output as a result of processing by processor(s) 112 (e.g., using trained inference model(s) 114) may be stored for future use or transmitted to another application or user.

In some embodiments, during real-time tracking, information sensed from a single armband/wristband wearable device that includes at least one IMU and a plurality of neuromuscular sensors is used to reconstruct body movements, such as reconstructing the position and orientation of both the forearm, upper arm, wrist and hand relative to a torso reference frame using a single arm/wrist-worn device, and without the use of external devices or position determining systems. For brevity, determining both position and orientation may also be referred to herein generally as determining movement.

As discussed above, some embodiments are directed to using an inference model for predicting musculoskeletal position information based on signals recorded from wearable autonomous sensors. The inference model may be used to predict the musculoskeletal position information without having to place sensors on each segment of the rigid body that is to be represented in a computer-generated musculoskeletal representation of user's body. As discussed briefly above, the types of joints between segments in a multi-segment articulated rigid body model constrain movement of the rigid body. Additionally, different individuals tend to move in characteristic ways when performing a task that can be captured in statistical patterns of individual user behavior. At least some of these constraints on human body movement may be explicitly incorporated into inference models used for prediction in accordance with some embodiments. Additionally or alternatively, the constraints may be learned by the inference model through training based on recorded sensor data. Constraints imposed in the construction of the inference model are those set by anatomy and the physics of a user's body, while constraints derived from statistical patterns are those set by human behavior for one or more users from which sensor measurements are measured. As described in more detail below, the constraints may comprise part of the inference model itself being represented by information (e.g., connection weights between nodes) in the model.

In some embodiments, system 100 may be trained to predict musculoskeletal position information as a user moves or activates muscle fibers. In some embodiments, the system 100 may be trained by recording signals from autonomous sensors 110 (e.g., IMU sensors, EMG sensors) and position information recorded from position sensors worn by one or more users as the user(s) perform one or more movements. The position sensors, described in more detail below, may measure the position of each of a plurality of spatial locations on the user's body as the one or more movements are performed during training to determine the actual position of the body segments. After such training, the system 100 may be configured to predict, based on a particular user's autonomous sensor signals, musculoskeletal position information (e.g., a set of joint angles) that enable the generation of a musculoskeletal representation without the use of the position sensors.

As discussed above, the invention is directed to using an inference model for predicting musculoskeletal position information to enable the generation of a computer-based musculoskeletal representation. The inference model is used to predict the musculoskeletal position information based on neuromuscular signals (e.g., EMG, MMG, and SMG signals), or a combination of IMU signals and neuromuscular signals detected as a user performs one or more movements.

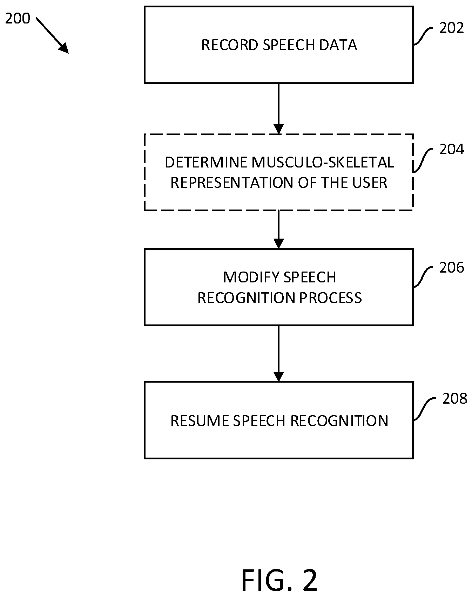

FIG. 2 describes a process 200 for using neuromuscular information to improve speech recognition. Process 200 may be executed by any suitable computing device(s), as aspects of the technology described herein are not limited in this respect. For example, process 200 may be executed by processor(s) 112 described with reference to FIG. 1. As another example, one or more acts of process 200 may be executed using one or more servers (e.g., servers included as a part of a cloud computing environment). For example, at least a portion of act 204 relating to determining a musculoskeletal representation of the user may be performed using a cloud computing environment. Although process 200 is described herein with respect to processing IMU and EMG signals, it should be appreciated that process 200 may be used to predict neuromuscular information based on any recorded autonomous signals including, but not limited to, IMU signals, EMG signals, MMG signals, SMG signals, or any suitable combination thereof and a trained inference model trained on such autonomous signals.

Process 200 begins at act 202, where speech data is obtained for one or multiple users from voice interface 120. For example, voice interface 120 may include a microphone that samples audio input at a particular sampling rate (e.g., 16 kHz), and recording speech data in act 202 may include sampling audio input by the microphone. Sensor data for a plurality of neuromuscular signals may be obtained from sensors 110 in parallel, prior to, or subsequent to obtaining the speech data from voice interface 120. For example, speech data corresponding to a word from the user may obtained at the same time as sensor data corresponding to a gesture from the user to change the formatting of the word. In another example, speech data corresponding to a word from the user may obtained, and at a later time, sensor data may be obtained corresponding to a gesture from the user to delete the word. In yet another example, sensor data may be obtained corresponding to a gesture from the user to change the formatting for text user may obtained and formatted accordingly. Optionally, process 200 proceeds to act 204, where the plurality of neuromuscular signals from sensors 110, or signals derived from the plurality of neuromuscular signals, are provided as input to one or more trained inference models and a musculoskeletal representation of the user is determined based, at least in part, on an output of the one or more trained inference models.

In some embodiments, signals are recorded from a plurality of autonomous sensors arranged on or near the surface of a user's body to record activity associated with movements or activations of the body during performance of a task. In one example, the autonomous sensors comprise an IMU sensor and a plurality of EMG sensors arranged circumferentially (or otherwise oriented) on a wearable device configured to be worn on or around a part of the user's body, such as the user's arm. In some embodiments, the plurality of EMG signals are recorded continuously as a user wears the wearable device including the plurality of autonomous sensors.

In some embodiments, the signals recorded by the autonomous sensors are optionally processed. For example, the signals may be processed using amplification, filtering, rectification, or other types of signal processing. In some embodiments, filtering includes temporal filtering implemented using convolution operations and/or equivalent operations in the frequency domain (e.g., after the application of a discrete Fourier transform). In some embodiments, the signals are processed and used as training data to train the inference model.

In some embodiments, the autonomous sensor signals are provided as input to an inference model (e.g., a neural network) trained using any suitable number of layers and any suitable number of nodes in each layer. In some embodiments that continuously record autonomous signals, the continuously recorded autonomous signals (raw or processed) may be continuously or periodically provided as input to the trained inference model for prediction of a musculoskeletal representation for the given set of input sensor data. In some embodiments, the trained inference model is a user-independent model trained based on autonomous sensor and position information measurements from a plurality of users. In other embodiments, the trained model is a user-dependent model trained on data recorded from the individual user from which the data recorded in act 204 is also acquired.

In some embodiments, after the trained inference model receives the sensor data as a set of input parameters, a predicted musculoskeletal representation is output from the trained inference model. In some embodiments, the predicted musculoskeletal representation may comprise a set of body position information values (e.g., a set of joint angles) for a multi-segment articulated rigid body model representing at least a portion of the user's body. In other embodiments, the musculoskeletal representation may comprise a set of probabilities that the user is performing one or more movements, forces, poses, gestures, and/or activations from a set of possible movements, forces, poses, gestures, and/or activations.

Next, process 200 proceeds to act 206, where an instruction for modifying an operation of a speech recognizer is determined, and the instruction is provided to the speech recognizer. In embodiments where process 200 does not include act 204, the instruction for modifying the operation of the speech recognizer is determined based, at least in part, on an output of the one or more trained inference models. For example, the one or more trained inference models may directly map sensor data, e.g., EMG signal data, to the instruction for modifying the operation of the speech recognizer. In embodiments where process 200 includes act 204, the instruction for modifying the operation of the speech recognizer is determined based on the musculoskeletal representation determined in act 204. In some embodiments, process 200 modifies the speech recognition process. For example, process 200 may modify at least a portion of text output from the speech recognizer, where the modification may relate to punctuation, spelling, formatting, or another suitable modification of the text. In another example, process 200 may change a caps lock mode of the speech recognizer. In yet another example, process 200 may change a language mode of the speech recognizer. For example, the speech recognizer may be instructed to change from recognizing English to recognizing French. Some embodiments include a communications interface configured to provide the instruction from a processor, e.g., processor(s) 112, to the speech recognizer. In some embodiments, a processor, e.g., processor(s) 112, is programmed to execute the speech recognizer. Process 200 proceeds to step 208, where speech recognition is resumed, e.g., for speech data recorded at act 202 or other suitable audio input.

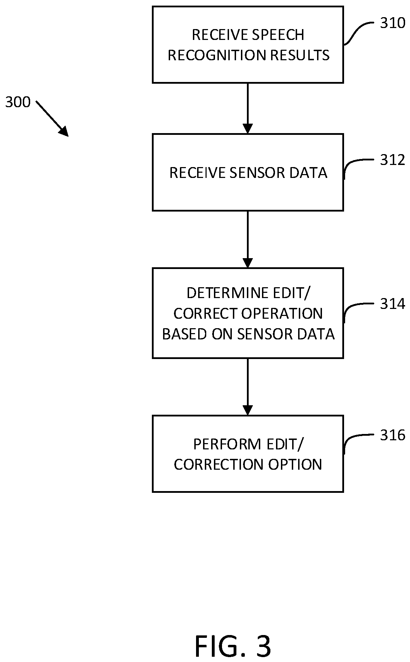

FIG. 3 describes a process 300 for using neuromuscular information to improve speech recognition. Process 300 may be executed by any suitable computing device(s), as aspects of the technology described herein are not limited in this respect. For example, process 300 may be executed by processor(s) 112 described with reference to FIG. 1. As another example, one or more acts of process 300 may be executed using one or more servers (e.g., servers included as a part of a cloud computing environment). For example, at least a portion of act 314 relating to determining an edit and/or correct operation based on sensor data may be performed using a cloud computing environment. Although process 300 is described herein with respect to IMU and EMG signals, it should be appreciated that process 300 may be used to predict neuromuscular information based on any recorded autonomous signals including, but not limited to, IMU signals, EMG signals, MMG signals, SMG signals, or any suitable combination thereof and a trained inference model trained on such autonomous signals.

Process 300 begins at act 310, where speech recognition results are obtained, e.g., from speech data received from voice interface 120. In some embodiments, processor(s) 112 may perform ASR based on the speech data to generate the speech recognition results. In some embodiments, audio input including speech data may be processed by an ASR system, which produces speech recognition results by converting audio input to recognized text. The received speech data may be stored in a datastore (e.g., local or remote storage) associated with system 100 to facilitate the ASR processing.

Next, at act 312, sensor data is received, for example, from sensors 110. The sensor data may be recorded and processed as described with respect to the process of FIG. 2. The sensor data may include a plurality of neuromuscular signals and/or signals derived from the plurality of neuromuscular signals. The sensor data may be provided as input to one or more trained inference models and the musculoskeletal representation of the user may be determined based, at least in part, on an output of the one or more trained inference models. Process 300 then proceeds to act 314, where an edit and/or correct operation is determined based on the sensor data. An instruction relating to the edit and/or correct operation of the speech recognizer is determined based on the determined musculoskeletal representation, and the instruction is provided to the speech recognizer.

Next, process 300 proceeds to act 316 where the edit and/or correct operation is performed on the speech recognition results. For example, the edit and/or correct operation may be performed on the speech recognition results by allowing a user to edit and correct speech recognition results by selecting possibilities from a list. In another example, the edit and/or correct operation may be performed on the speech recognition results by allowing the user to initiate a spelling mode and correct spellings for one or more words in the speech recognition results. In yet another example, the edit and/or correct operation may be performed on the speech recognition results by allowing the user to delete one or more words in the speech recognition results. In another example, the edit and/or correct operation on the speech recognition results may be performed by allowing the user to scroll through the speech recognition results and insert one or more words at a desired insertion point in the speech recognition results. In another example, the edit and/or correct operation may be performed on the speech recognition results by allowing the user to select and replace one or more words in the speech recognition results. In another example, the edit and/or correct operation may be performed on the speech recognition results by auto-completing a frequently used phrase in the speech recognition results or allowing the user to select from a list of suggested completions for a phrase in the speech recognition results.

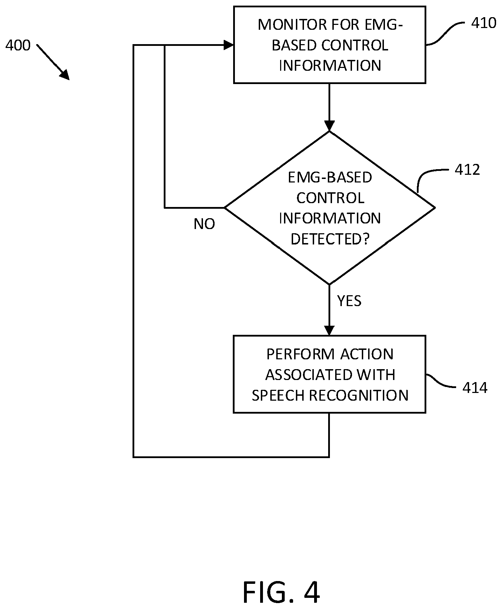

FIG. 4 describes a process 400 for using neuromuscular information to improve speech recognition. Process 400 may be executed by any suitable computing device(s), as aspects of the technology described herein are not limited in this respect. For example, process 400 may be executed by processor(s) 112 described with reference to FIG. 1. As another example, one or more acts of process 400 may be executed using one or more servers (e.g., servers included as a part of a cloud computing environment). For example, at least a portion of act 412 relating to detecting EMG-based control information may be performed using a cloud computing environment. Although process 400 is described herein with respect to IMU and EMG signals, it should be appreciated that process 400 may determine neuromuscular information based on any recorded autonomous signals including, but not limited to, IMU signals, EMG signals, MMG signals, SMG signals, or any suitable combination thereof and a trained inference model trained on such autonomous signals.

Process 400 begins at act 410, where control information is monitored, e.g., for one or more movements or activations performed by the user. For example, process 400 may monitor one or more EMG signals relating to neuromuscular information while speech data is obtained for one or multiple users from voice interface 120. Voice interface 120 may include a microphone that samples audio input at a particular sampling rate (e.g., 16 kHz). Sensor data relating to the control information may be received from sensors 110. The sensor data may include a plurality of neuromuscular signals and/or signals derived from the plurality of neuromuscular signals.

Next, process 400 proceeds to act 412, where it is determined whether control information relating to a particular movement or activation is detected. The sensor data may be provided as input to one or more trained inference models and control information of the user may be determined based, at least in part, on an output of the one or more trained inference models. The sensor data may be provided as input to a trained inference model to determine control information as described with respect to FIG. 2.

If it is determined that control information for a particular movement or activation is detected, process 400 proceeds to act 414, where an action associated with speech recognition, and determined based on the detected control information, is performed. Otherwise, process 400 returns to act 410 to continue monitoring for control information. Performing an action with speech recognition may include, but is not limited to, altering a mode of the speech recognizer, starting or stopping the speech recognizer, or another suitable action associated with the speech recognizer. In another example, the user may perform a specific gesture to toggle the speech recognizer on and off, hold the gesture to keep the speech recognizer on, or hold a mute gesture to mute the speech recognizer. Determining an instruction for performing an action for the speech recognizer may be based on the determined control information, and the instruction may be provided to the speech recognizer. For example, the action associated with speech recognition may be performed by allowing a user to start or stop speech recognition, e.g., by making a gesture imitating a press of a button on a tape recorder. In another example, the action associated with speech recognition may be performed by allowing a user to initiate a spell check mode. In yet another example, the action associated with speech recognition may be performed by allowing a user to change the language of input by making a related gesture.

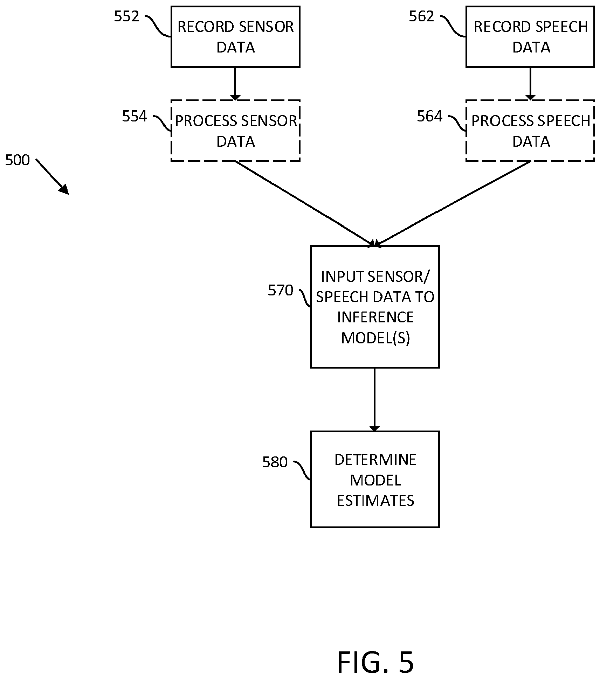

FIG. 5 describes a process 500 for using neuromuscular information to improve speech recognition. Process 500 may be executed by any suitable computing device(s), as aspects of the technology described herein are not limited in this respect. For example, process 500 may be executed by processor(s) 112 described with reference to FIG. 1. As another example, one or more acts of process 500 may be executed using one or more servers (e.g., servers included as a part of a cloud computing environment). For example, at least a portion of act 580 relating to determining model estimates may be performed using a cloud computing environment. Although process 500 is described herein with respect to IMU and EMG signals, it should be appreciated that process 500 may determine neuromuscular information based on any recorded autonomous signals including, but not limited to, IMU signals, EMG signals, MMG signals, SMG signals, or any suitable combination thereof and a trained inference model trained on such autonomous signals.

In some embodiments, process 500 provides for a hybrid neuromuscular and speech input interface where a user may fluidly transition between using speech input, using neuromuscular input or using both speech input and neuromuscular input to perform speech recognition. The neuromuscular input may track body position information, movement, hand state, forces, poses, gestures, activations (e.g., from muscle fibers too weak to cause noticeable movement) or other suitable information relating to the plurality of recorded neuromuscular signals. In some embodiments, the speech input and neuromuscular input are used to provide for lower error rates in speech recognition. In other embodiments, the speech input and the neuromuscular input may be used selectively where one mode of input is preferable over the other. For example, in situations where it is not possible to speak aloud, only the neuromuscular input may be used to perform recognition.

At act 552 of process 500, sensor data is recorded, e.g., from sensors 110, and at act 554, the recorded sensor data is optionally processed. The sensor data may include a plurality of neuromuscular signals and/or signals derived from the plurality of neuromuscular signals. At act 562 of process 500, speech data is recorded, e.g., from one or multiple users from voice interface 120, and at act 564, the recorded speech data is optionally processed. Voice interface 120 may include a microphone that samples audio input at a particular sampling rate (e.g., 16 kHz), and the speech data may be recorded by sampling audio input received by the microphone.

At act 570 of process 500, one or both of the processed or unprocessed sensor data and speech data is provided as input to one or more trained inference models. In some embodiments, both sensor data and speech data are input to the trained inference model(s) to provide for lower speech recognition error rates. The inference model(s) may be trained on both inputs used in parallel. In some embodiments, only one of the sensor data or the speech data may be provided as input to the trained inference models. The inference models trained on both inputs may be configured to gracefully transition between speech-only mode, sensor-mode, and combined speech + sensor data mode based on particular conditions of the system use, for example, when only one input is available. In some embodiments, both the speech data, e.g., audio input, and the sensor data, e.g., a plurality of neuromuscular signals, are provided as input to the one or more trained inference models. The audio input may be provided as input to the one or more trained inference models at a first time and the plurality of neuromuscular signals is provided as input to the one or more trained inference models at a second time different from the first time. Alternatively, the speech data and the sensor data may be provided as input to the one or more trained inference models simultaneously or at a substantially same time.

At act 580 of process 500, a speech recognition result (e.g., text) for the input sensor and/or speech data is determined based, at least in part, on an output of the one or more trained inference models. In some embodiments, the speech recognition result is determined by processing the audio input to determine a first portion of the text, and by processing the plurality of neuromuscular signals to determine a second portion of the text. In some embodiments, the one or more trained inference models include a first trained inference model for determining the text based on the audio input and a second trained inference model for determining the text based on the plurality of neuromuscular signals.

The speech recognition result may be determined for at least a first portion of the text based on a first output of the first trained inference model. In some embodiments, the text is further determined for at least a second portion of the text based on a second output of the second trained inference model. In some embodiments, the first portion and the second portion are overlapping. For example, the first three-quarters of the text may be determined using speech input whereas the last three-quarters of the text may be determined using neuromuscular input, with the middle of the text being determined using both speech and neuromuscular input. In this example, the user may have provided both speech input and neuromuscular input from the one-quarter mark to the three-quarter mark, while only providing speech input or neuromuscular input otherwise. In some embodiments, the first portion and the second portion are non-overlapping. For example, the first half of the text may be determined using speech input whereas the second half of the text may be determined using neuromuscular input.

In some embodiments, one or more inference models for a hybrid neuromuscular and speech input interface are provided such that a first inference model is trained for determining the text based on the audio input and a second inference model is trained for determining the text based on the plurality of neuromuscular signals. Such a model implementation may be advantageous for faster training of new movements or activations because only the second inference model need be updated in the training process. It is noted that the model implementation for the hybrid neuromuscular and speech input interface need not be limited to the described implementation. For example, such systems may employ one model for processing both neuromuscular and speech inputs or multiple models for processing each of the neuromuscular and speech inputs. Further details on how to combine the outputs of such models are provided below.

In some embodiments, an ASR model is provided and subsequently trained to personalize the ASR model according to EMG-based sensor data received for the user. For example, the ASR model may be provided as an artificial neural network with one or more layers, each layer including nodes with assigned weights. A layer of the artificial neural network may receive input in the form of EMG-based sensor data to learn the movements or activations from the user and corresponding output, e.g., text. Alternatively or additionally, the weights in one or more layers of the artificial neural network may be adapted to learn the movements or activations from the user and corresponding output. In some embodiments, a single model receives both speech data and EMG-based sensor data as inputs and the model is trained to generate output corresponding to these inputs. For example, the model may be provided with data collected as the user speaks, e.g., a phrase, and performs a corresponding movement or activation. In some embodiments, an engineered combination of models is provided where EMG-based sensor data relating to neuromuscular information is used to switch between one or more trained inference models trained on speech data. For example, the EMG-based sensor data may be used to determine when a user makes a movement or activation to switch a language mode of the speech recognizer. Accordingly, if it is determined that the user desires a different language mode, the trained inference model corresponding to the desired language mode is selected.

In some embodiments, the output predictions of a first inference model (trained for determining text based on speech data, also referred to as a language model) and a second inference model (trained for determining text based on sensor data, such as EMG signals) are combined as described below.

For notation, $P(A \mid B)$ is defined as the conditional probability of A given B. The language model may give a prior distribution P(text) over the possible text utterances. Bayes' rule may be applied to calculate the probability of the text given the observed speech and EMG sensor data, according to the following formula:

$$P(\text{text} \mid \text{speech, EMG}) = P(\text{speech, EMG} \mid \text{text}) * P(\text{text}) / P(\text{speech, EMG})$$

For optimizing the output predictions, i.e., text, the term P(speech, EMG) may be ignored and the combination may focus on the proportionality relationship, according to the following formula:

$$P(\text{text} \mid \text{speech, EMG}) \sim P(\text{speech, EMG} \mid \text{text}) * P(\text{text})$$

The speech data and the EMG data may be assumed to be conditionally independent given the output text, according to the following formula:

$$P(\text{speech, EMG} \mid \text{text}) = P(\text{speech} \mid \text{text}) * P(\text{EMG} \mid \text{text})$$

This assumption yields following formula:

$$P(\text{text} \mid \text{speech, EMG}) \sim P(\text{speech} \mid \text{text}) * P(\text{EMG} \mid \text{text}) * P(\text{text})$$

In embodiments where the individual models have a stage at which they output these conditional probabilities, the above formula may be applied directly.
In embodiments where the models output the P(text | speech) and P(text | EMG), Bayes rule may be applied, according to the following formulas:

$$P(\text{speech} \mid \text{text}) = P(\text{text} \mid \text{speech}) * P(\text{speech}) / P(\text{text}),$$

and

$$P(\text{EMG} \mid \text{text}) = P(\text{text} \mid \text{EMG}) * P(\text{EMG}) / P(\text{text})$$

These two equations may be substituted into the formula derived above, according to the following formula:

$$P(\text{text} \mid \text{speech, EMG}) \sim P(\text{text} \mid \text{speech}) * P(\text{speech}) * P(\text{text} \mid \text{EMG}) * P(\text{EMG}) / P(\text{text})$$

Finally, the terms with just speech and EMG may be dropped because output predictions are being optimized over text, according to the following formula:

$$P(\text{text} \mid \text{speech, EMG}) \sim P(\text{text} \mid \text{speech}) * P(\text{text} \mid \text{EMG}) / P(\text{text})$$

This formula combines a speech model that gives P(text | speech) with an EMG model that gives P(text | EMG).
In some embodiments, only one of the substitutions may be applied if a model gives P(EMG | text), according to the following formula:

$$P(\text{text} \mid \text{speech, EMG}) \sim P(\text{text} \mid \text{speech}) * P(\text{EMG} \mid \text{text})$$

In some embodiments, the prior distribution of words/phrases in the language model is altered, e.g., when the gesture or pose provides context for interpreting the speech. For example, the gesture may be a natural gesture a user makes in a given context to switch modes, such as a making a fist gesture to switch to a proper noun mode. In proper noun mode, the language model output is biased such that proper nouns have a higher prior probability. If the language model is made aware of the upcoming input of a proper noun, the output of the model is more likely to be text for a proper noun. For example, the prior probability of proper nouns may be multiplied by a number greater than one to increase the bias for proper nouns. The language model may function in the same manner as before the switch to proper noun mode, except for applying a higher prior probability to proper nouns.

In some embodiments, the described systems and methods allow for obtaining one or more neuromuscular signals (e.g., EMG signals) in parallel with or substantially at the same time as obtaining speech data for one or multiple users. The neuromuscular information derived from the signals may be used to modify the behavior of the speech recognizer, e.g., switch to another mode of the speech recognizer. For example, neuromuscular information derived from neuromuscular signals from a user may indicate that the user wishes to activate a "spell mode" of the speech recognizer. Accordingly, the neuromuscular information may be used to switch the mode of the speech recognizer to character-based text entry. The user may make movements or activations and the corresponding neuromuscular information may be used to interpret the characters the user wishes to enter. Subsequently, neuromuscular information derived from neuromuscular signals from the user may indicate that the user wishes to deactivate the "spell mode" of the speech recognizer. In this manner, the user may alternate between speech input (e.g., to enter words) and neuromuscular input (e.g., to enter characters) in order to enter the desired text. In some embodiments, when switching to "spell mode," the speech recognizer swaps a language model suitable for speech input (e.g., to enter words) with another language model suitable for neuromuscular input (e.g., to enter characters). In some embodiments, when switching to "spell mode," the language model output is biased towards character-based text entry. For example, a prior distribution in the language model is selected to better recognize character-based entry. If the language model is made aware of the upcoming input of character-based text entry, the output of the model is more likely to recognize the characters as spelling out one or more words.

Some embodiments of the systems and methods described herein provide for determining text input with model(s) that use a linguistic token, such as phonemes, characters, syllables, words, sentences, or another suitable linguistic token, as the basic unit of recognition. An advantage of using phonemes as the linguistic token may be that using a phoneme-based representation is more similar to the natural speech language processing than character-based typing. Additionally, using a phoneme-based model may provide faster recognition performance than a character-based model approach because the phoneme-based approach uses a denser encoding compared to using characters.

For the implementation using phonemes as the linguistic token, the inventors have recognized that creating a phoneme-based vocabulary that is easy to learn and recognize may be challenging in part because the number of phonemes in a language (e.g., 36 phonemes for English) may be larger than the number of characters in the language (e.g., 26 characters). In some embodiments, the text input may be performed using an adaptive movement or activation information recognizer instead of a fixed phoneme vocabulary. In some embodiments, a speech synthesizer provides audio feedback to the user while the user trains the adaptive system to create a mapping between body position information (e.g., movement, hand states, and/or gestures) and phonemes. In some embodiments, the training system may be presented to the user as a game, e.g. a mimicry game. Language models may be applied to the input, similar to a speech recognizer, to decode EMG signals through soft phoneme predictions into text.

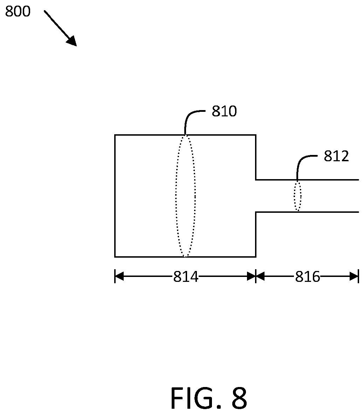

The human vocal tract may be modeled as a series of resonating cavities that filter sound waves produced at a sound source (e.g., the vocal folds). For example, when a human generates speech, air expelled from the lungs vibrates the vocal folds to create sound waves within the vocal tract. The sound waves are filtered based on the shapes of the various cavities in the vocal tract. For example, the sound waves are filtered by the shape of the throat, the nose, and the mouth (including the tongue and the lips). Altering the dimensions and/or the shape of the different portions of the vocal tract over time results in the production of different speech sounds. FIG. 8 is a schematic diagram of an illustrative vocal tract model 800 with two resonating cavities. In this example, the dimensions of one or both the resonating cavities may be altered by modifying the respective diameters 810, 812 and/or lengths 814, 816.

In some embodiments, neuromuscular signals recorded from a user using neuromuscular sensors arranged on a wearable device, or a processed version of the recorded neuromuscular signals, are used to determine parameters for a vocal tract model that represents at least a portion of the vocal tract. The neuromuscular signals, or signals derived from the neuromuscular signals, are provided as input to one or more inference models trained to map the input signals to parameters of a vocal tract model. One or more parameters for driving the vocal tract model are determined based, at least in part, on an output of the one or more trained inference models. The determined parameters output from the inference model may be used, for example, to synthesize a vocalization that may be provided to the user, another user, an apparatus for recording the synthesized vocalization (e.g., a voice recorder), and/or otherwise made available for access by the user or someone else. The vocalization may include speech and/or other suitable sounds that may be generated by the vocal tract model, such as humming, yodeling, and/or singing. Examples of vocal tract model parameters that may be determined include, but are not limited to, the dimensions of each of the segments of the vocal tract model such as the length, and/or the shape of the segment over time, and a frequency, volume, timber, or another suitable parameter of the sound waves generated by the sound source. It should be appreciated, however, that any suitable vocal tract parameters sufficient to synthesize a vocalization may be determined, and embodiments are not limited based on the particular vocal tract parameters that are determined.

In some embodiments, the described systems and methods allow for the user to "speak" with their hands by providing hand states that correspond to different linguistic tokens, such as phonemes. For example, some gesture-based language techniques, such as American Sign Language, map gestures to individual characters (e.g., letters) or entire words. Some embodiments are directed to allowing the user to "speak" with their hands using an intermediate level of representation between characters and entire words, that more closely represents speech production. For example, a phoneme representation may be used and a model may map the user's hand states to particular phonemes. A phoneme-based system may provide a measure of privacy because a user may perform the movement or activation, such as the gesture, without moving or with little motion. It is noted that such movement-free or limited-movement systems need not be limited to using phonemes as their linguistic token. For example, such systems may use another linguistic token, such as characters. Such a system may also enable the user to provide input faster than they could using individual characters, but without having to learn movements or activations for a large vocabulary of words. For example, a phoneme-based system may provide for a speed of 200 words per minute, which is faster than a typical character typing rate. It is noted that such systems may additionally or alternatively use another linguistic token, such as common letter combinations found on a stenographer's keyboard.

In some embodiments, the described systems and methods allow for the user to "speak" with their hands by providing movement or activation that correspond to different linguistic tokens, such as characters. In using such a character representation, a model may map EMG signals for the user's hand states (e.g., positions of segments of the user's arm or hand, forces applied across joints of the user's arm or hand, etc.) to particular characters. For example, the user may type on a flat surface as if it were a keyboard and perform hand states for keys corresponding to the characters the user wishes to enter. Such a character-based text entry (e.g., via detection of EMG signals) may be combined with speech-based text entry. The user may use speech-based text entry for initial text but, for example at a later point in time, switch modes to character-based text entry (e.g. enter "spell mode") and input hand states corresponding to the characters the user wishes to enter. In other embodiments, speech-based entry may be processed in parallel with text entry, such as using a speech command to change entry mode while typing (e.g., changing to all capitals, executing a control key operation, etc.) or modify a current input from or output to another device (e.g., a keyboard, a heads-up display, etc.). Any combination of entry using speech-based recognition and EMG signal processing may be performed to derive one or more multi-dimensional input/output mode(s) according to various embodiments.

In some embodiments, the described systems and methods allow for adaptive training of one or more inference models to map neuromuscular information to linguistic tokens, such as phonemes. In some embodiments, a trained inference model may directly map one or more neuromuscular signals to linguistic tokens. In other embodiments, multiple trained inference models may be used to map neuromuscular signals to linguistic tokens. For example, a first trained inference model may determine an intermediate representation (e.g., a musculoskeletal representation) from the one or more neuromuscular signals, and a second trained inference model may identify a linguistic token from the determined intermediate representation. For example, the user may be asked to produce one or more simple words using hand states corresponding to phonemes. In some embodiments, the training may not be directed to explicitly generating neuromuscular information, e.g., for a gesture, to phoneme mappings for the user. Instead, the user may be asked to produce hand states for one or more words and the inference models may be adapted based on the information learned from this process. For example, the user may be presented with a user interface that displays a training "game," where the user earns points for every correct hand state made to produce one or more target words. In some embodiments, a speech synthesizer may provide audio feedback to the user based on the phonemes produced by the user's hand states. The feedback may provide the user understanding on how to improve his or her hand states to produce the correct phonemes for the target words.

In some embodiments, a first trained inference model may determine an intermediate representation from the one or more neuromuscular signals, and a second trained inference model may identify a linguistic token from the determined intermediate representation. In some embodiments, multiple intermediate representations with associated inference models may be used. For example, a first inference model may take the signals as input and output a first intermediate representation, a second inference model may take as input the first intermediate representation and output a second intermediate representation, and so on. In some embodiments, one or more trained inference models may be used to generate corresponding intermediate representation(s) to feed into one or more trained inference models for identifying the linguistic token from the determined intermediate representation(s).

In some embodiments, the described systems and methods allow for the user to define an individualized mapping from neuromuscular information to linguistic tokens such as phonemes, by selecting what hand state, gesture, movement, or activation to use for each phoneme. For example, the user may train the one or more inference models using small finger movements or muscle activations detectable by sensors 110. If two movements are close to each other, the user may be asked to make the movement slightly differently to distinguish between the two movements. In some embodiments, feedback may be provided by the system to the user to encourage the user to produce movements or activations that are distinct from each other to enable the system to learn a better mapping from movement or activation to phoneme.

In some embodiments, a pre-trained fixed mapping, analogous to typing on a regular keyboard may be provided and the pre-trained mapping may be adapted or individualized to the user's movement or activation characteristics as the user uses the system. In such an adaptive system, the user may be able to minimize their movement over time to achieve the same system performance, such that smaller and smaller movements may be sufficient to produce neuromuscular signals mapped to different phonemes recognizable by the system. The system may be configured to adapt to the user's movements or activations in the background as the user is performing typical everyday tasks. For example, the system may be configured to track keys pressed by a user (e.g., using a key logger) as the user wears the wearable device of the system while typing on a keyboard, and the system may be configured to determine mappings between neuromuscular information, as the user types, and the recorded keystrokes.

Moreover, the system may not be limited to training in a phase separate from use of the system. In some embodiments, the system is configured to adapt a pre-trained mapping, e.g., trained using a physical keyboard, or another suitable mapping based on information from tracking a signal from the user indicating an erroneous text entry. For example, the signal may include a voice command (e.g., "backspace," "undo," "delete word," or another suitable voice command indicating an error was made), one or more neuromuscular signals (e.g., a gesture relating to a command, such as "backspace," "undo," "delete word," or another suitable command indicating an error was made), a signal from the user accepting an auto-correction of an erroneous text entry, or another suitable user signal indicating an erroneous text entry. The system may adapt a pre-trained mapping or another suitable mapping to the user based on this tracked information.

In some embodiments, the system is configured to adapt a pre-trained mapping (e.g., retrain a trained inference model), as described above, by updating or re-training a corresponding trained inference model that receives as input neuromuscular signals, or signals derived from the neuromuscular signals, and determines as output one or more linguistic tokens. The trained inference model may be updated using positive and/or negative reinforcement based on user actions. For example, the trained inference model may be updated based on positive reinforcement in the form of the user accepting a prompt with a prediction that one or more of the determined linguistic tokens are incorrect. In another example, the trained inference model may be updated based on negative reinforcement in the form of user input, such as a delete or backspace key, a voice command, or other suitable user input, indicating that one or more of the determined linguistic tokens are incorrect.

In some embodiments, the system may predict that the determined linguistic token(s) are incorrect. For example, the determined linguistic token(s) may have a low confidence score, and the system may execute an autocorrect routine based on the confidence score being below a threshold (e.g., 80% or another suitable threshold). The autocorrect routine may predict that the determined linguistic token(s) are incorrect and optionally provide replacement linguistic token(s). The system may obtain, from a user, an indication confirming the prediction that the determined linguistic token(s) are incorrect. The system may update the trained inference model based on the indication.

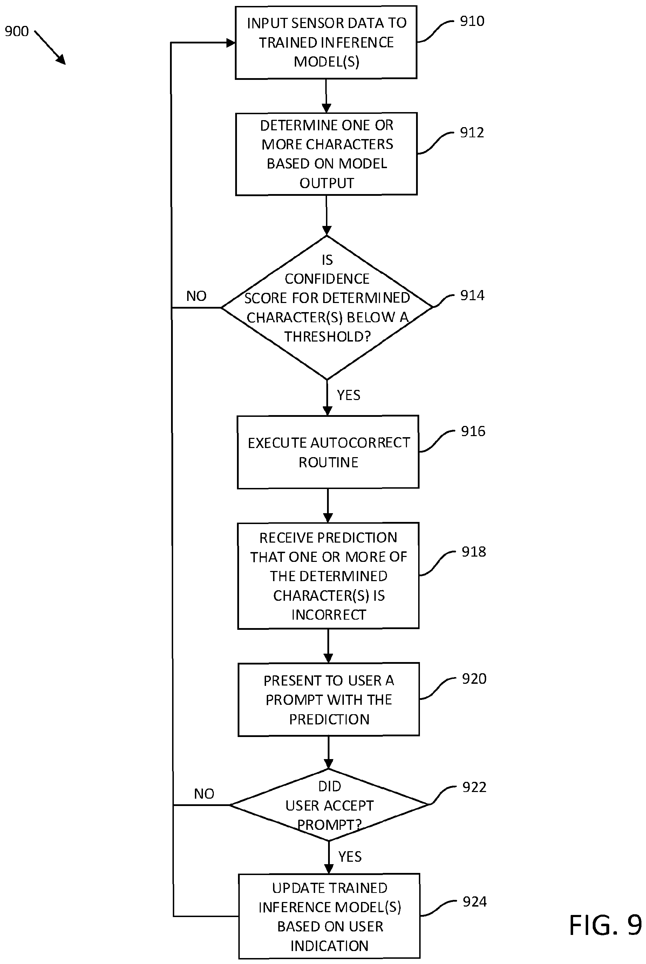

FIG. 9 is a flowchart of an illustrative process 900 for using positive reinforcement from a user to update a trained inference model. At step 910, the system may provide sensor data, e.g., neuromuscular signals, as input to the trained inference model. At step 912, the system may determine one or more characters as output from the trained inference model. At step 914, the system may determine whether a confidence score for the determined character(s) is low (e.g., below a threshold). At step 916, the system may execute an autocorrect routine, based on a low confidence score (e.g., below a threshold) associated with the determined character(s). For example, a natural language understanding (NLU) model may be used to process the one or more characters output from the trained inference model and generate one or more confidence scores, e.g., relating to whether a particular determined character is relevant to the user's intended input. At step 918, the system may receive a prediction that one or more of the determined characters are incorrect. At step 920, the system may present to the user a prompt with the prediction that the determined character(s) are incorrect. At step 922, the system may determine whether positive reinforcement was received in the form of the user accepting the prompt. For example, the system may receive user input for accepting the prompt in the form of a key (e.g., a user pressing an enter key on a keyboard), a voice command, neuromuscular signals, signals derived from neuromuscular signals, a pose, a gesture, a force, a handstate, and/or other suitable user input. At step 924, the system may update the trained inference model based on this positive reinforcement indication from the user, thereby reducing the likelihood that incorrect characters may be determined by the updated trained inference model when additional recorded neuromuscular signals are processed by the model.

In some embodiments, the system may obtain, from the user, an indication that the determined linguistic token is incorrect. The system may receive negative reinforcement in the form of user input, such as a key (e.g., a user pressing a delete or backspace key on a keyboard), a voice command, neuromuscular signals, signals derived from neuromuscular signals, a pose, a gesture, a force, a handstate, and/or other suitable user input, indicating that one or more of the determined characters are incorrect. The system may update the trained inference model based on this negative reinforcement indication from the user.

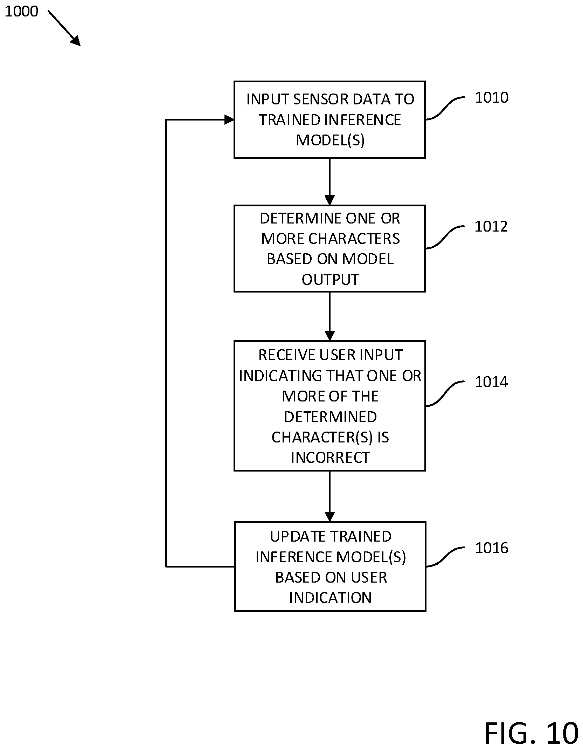

FIG. 10 is a flowchart of an illustrative process for using negative reinforcement from a user to update a trained inference model. At step 1010, the system may provide sensor data, e.g., neuromuscular signals, as input to the trained inference model. At step 1012, the system may determine one or more characters as output from the trained inference model. At step 1014, the system may receive negative reinforcement in the form of user input, such as a delete or backspace key, a voice command, neuromuscular signals, signals derived from neuromuscular signals, a pose, a gesture, a force, a handstate, and/or other suitable user input, indicating that one or more of the determined characters are incorrect. At step 1016, the system may update the trained inference model based on this negative reinforcement indication from the user.

In some embodiments, the system may determine, or receive user input including, replacement character(s) for the incorrectly determined character(s). The system may update the trained inference model based on this additional information.

In some embodiments, the system is configured to adapt a pre-trained mapping or another suitable mapping based on consistency with a language model. For example, in absence of the adaptation to the language model, the system may determine output text to be "she yikes to eat ice cream," instead of "she likes to eat ice cream." The language model may include prior probabilities of certain combinations of words, phrases, sentences, or another suitable linguistic token, and the system may select the output text corresponding to a higher probability in the language model. For example, the language model may indicate that the phrase "likes to eat" has a higher probability than the phrase "yikes to eat." Accordingly, to be consistent with the language model, the system may adapt the pre-trained mapping or another suitable mapping and select output text having the higher probability, e.g., "she likes to eat ice cream."

In some embodiments, the system is configured to map neuromuscular information (derived from one or more neuromuscular signals, e.g., EMG signals) to an error indication from the user. For example, the user may tense one or more muscles after the system erroneously interprets a word the user spoke correctly. The neuromuscular signals relating to that movement or activation from the user may be mapped as an error indication from the user. In this manner, the user is not required to provide a training signal particularly relating to an error indication. In some embodiments, when the system detects neuromuscular information relating to the error indication, the system automatically corrects the error. For example, the system may automatically delete the last interpreted word. In another example, the system may provide the user with one or more options to correct the last interpreted word. In yet another example, the system may automatically replace the last interpreted word with another interpretation based on a language model. In some embodiments, the system may further adapt the pre-trained mapping or another suitable mapping based on the detected error indication. For example, the system may modify a language model associated with the speech recognizer to implement the correct interpretation. The system having been configured to detect the error indication may be able to differentiate between a case when the user made an error (e.g., the user spoke the wrong word) and a case when the speech recognizer made an error (e.g., the user spoke the correct word, but the speech recognizer interpreted it incorrectly). For example, the user may speak the word "yike" instead of "like," and the speech recognizer may interpret the word correctly as "yike." In this case, the system may detect the error to be a user error. In another example, the user may speak the word "like," but the speech recognizer may interpret the word incorrectly as "yike." The system may leverage the capability to separately detect these two types of errors to improve further adaptation of the pre-trained mapping or another suitable mapping to the user.

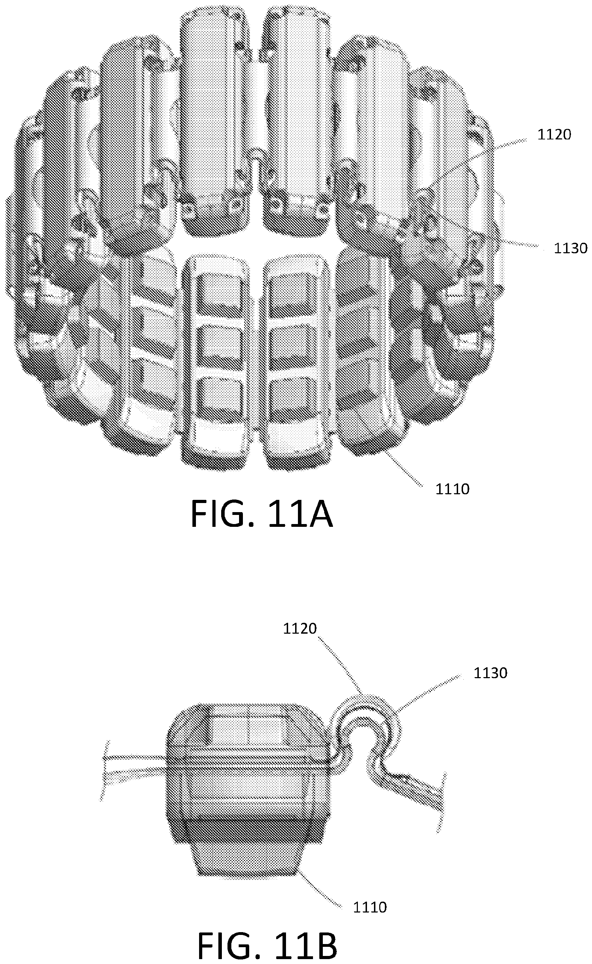

FIG. 11A illustrates a man-machine interface (also referred to herein as an EMG control interface) as a wearable system with sixteen neuromuscular sensors 1110 (e.g., EMG sensors) arranged circumferentially around an elastic band 1120 configured to be worn around a user's lower arm or wrist. As shown, EMG sensors 1110 are arranged circumferentially around elastic band 1120. It should be appreciated that any suitable number of neuromuscular sensors may be used. The number and arrangement of neuromuscular sensors may depend on the particular application for which the wearable system is used. For example, a wearable armband or wristband can be used to generate control information for controlling an augmented reality system, a robot, controlling a vehicle, scrolling through text, controlling a virtual avatar, or any other suitable control task. As shown, the sensors may be coupled together using flexible electronics incorporated into the wireless device, FIG. 11B illustrates a cross-sectional view through one of the sensors of the wearable system shown in FIG. 11A.

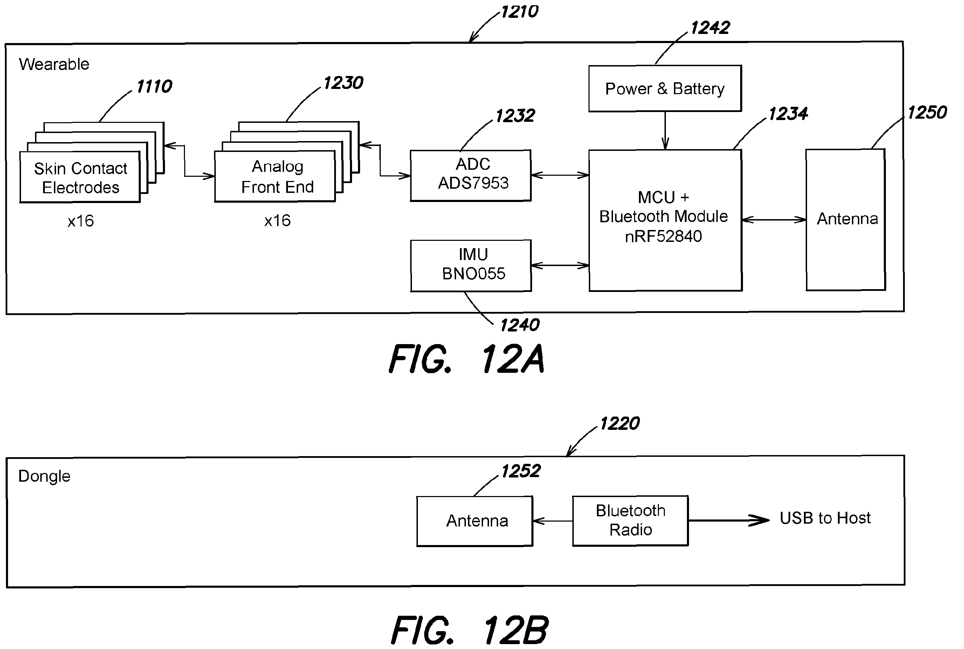

In some embodiments, the output of one or more of the sensing components can be optionally processed using hardware signal processing circuitry (e.g., to perform amplification, filtering, and/or rectification). In other embodiments, at least some signal processing of the output of the sensing components can be performed in software. Thus, signal processing of signals sampled by the sensors can be performed in hardware, software, or by any suitable combination of hardware and software, as aspects of the technology described herein are not limited in this respect. A non-limiting example of a signal processing chain used to process recorded data from sensors 1110 are discussed in more detail below with reference to FIGS. 12A and 12B.

FIGS. 12A and 12B illustrate a schematic diagram with internal components of a wearable system with sixteen EMG sensors. As shown, the wearable system includes a wearable portion 1210 (FIG. 12A) and a dongle portion 1220 (FIG. 12B) in communication with the wearable portion 1210 (e.g., via Bluetooth or another suitable short range wireless communication technology). As shown in FIG. 12A, the wearable portion 1210 includes sensors 1110, examples of which are described in connection with FIGS. 11A and 11B. The output of the sensors 1110 is provided to analog front end 1230 configured to perform analog processing (e.g., noise reduction, filtering, etc.) on the recorded signals. The processed analog signals are then provided to analog-to-digital converter 1232, which converts the analog signals to digital signals that can be processed by one or more computer processors. An example of a computer processor that may be used in accordance with some embodiments is microcontroller (MCU) 1234 illustrated in FIG. 12A. As shown, MCU 1234 may also include inputs from other sensors (e.g., IMU sensor 1240), and power and battery module 1242. The output of the processing performed by MCU may be provided to antenna 1250 for transmission to dongle portion 1220 shown in FIG. 12B.

Dongle portion 1220 includes antenna 1252 configured to communicate with antenna 1250 included as part of wearable portion 1210. Communication between antenna 1250 and 1252 may occur using any suitable wireless technology and protocol, non-limiting examples of which include radiofrequency signaling and Bluetooth. As shown, the signals received by antenna 1252 of dongle portion 1220 may be provided to a host computer for further processing, display, and/or for effecting control of a particular physical or virtual object or objects.

Although the examples provided with reference to FIGS. 11A, 11B and FIGS. 12A, 12B are discussed in the context of interfaces with EMG sensors, it is understood that the techniques described herein for reducing electromagnetic interference can also be implemented in wearable interfaces with other types of sensors including, but not limited to, mechanomyography (MMG) sensors, sonomyography (SMG) sensors, and electrical impedance tomography (EIT) sensors.

The above-described embodiments can be implemented in any of numerous ways. For example, the embodiments may be implemented using hardware, software or a combination thereof. When implemented in software, the software code can be executed on any suitable processor or collection of processors, whether provided in a single computer or distributed among multiple computers. It should be appreciated that any component or collection of components that perform the functions described above can be generically considered as one or more controllers that control the above-discussed functions. The one or more controllers can be implemented in numerous ways, such as with dedicated hardware or with one or more processors programmed using microcode or software to perform the functions recited above.

In this respect, it should be appreciated that one implementation of the embodiments of the present invention comprises at least one non-transitory computer-readable storage medium (e.g., a computer memory, a portable memory, a compact disk, etc.) encoded with a computer program (i.e., a plurality of instructions), which, when executed on a processor, performs the above-discussed functions of the embodiments of the present invention. The computer-readable storage medium can be transportable such that the program stored thereon can be loaded onto any computer resource to implement the aspects of the present invention discussed herein. In addition, it should be appreciated that the reference to a computer program which, when executed, performs the above-discussed functions, is not limited to an application program running on a host computer. Rather, the term computer program is used herein in a generic sense to reference any type of computer code (e.g., software or microcode) that can be employed to program a processor to implement the above-discussed aspects of the present invention.

Various aspects of the present invention may be used alone, in combination, or in a variety of arrangements not specifically discussed in the embodiments described in the foregoing and are therefore not limited in their application to the details and arrangement of components set forth in the foregoing description or illustrated in the drawings. For example, aspects described in one embodiment may be combined in any manner with aspects described in other embodiments.

Also, embodiments of the invention may be implemented as one or more methods, of which an example has been provided. The acts performed as part of the method(s) may be ordered in any suitable way. Accordingly, embodiments may be constructed in which acts are performed in an order different than illustrated, which may include performing some acts simultaneously, even though shown as sequential acts in illustrative embodiments.

Use of ordinal terms such as "first," "second," "third," etc., in the claims to modify a claim element does not by itself connote any priority, precedence, or order of one claim element over another or the temporal order in which acts of a method are performed. Such terms are used merely as labels to distinguish one claim element having a certain name from another element having a same name (but for use of the ordinal term).

The phraseology and terminology used herein is for the purpose of description and should not be regarded as limiting. The use of "including," "comprising," "having," "containing", "involving", and variations thereof, is meant to encompass the items listed thereafter and additional items.

Having described several embodiments of the invention in detail, various modifications and improvements will readily occur to those skilled in the art. Accordingly, the foregoing description is by way of example only, and is not intended as limiting. The invention is limited only as defined by the following claims.

**Claims**

1. A computerized system (100) for using neuromuscular information to improve speech recognition, the system comprising:

   at least one voice interface (120) configured to capture speech data produced by a user;
   a plurality of neuromuscular sensors (110, 502), arranged on one or more wearable devices (504) that are configured to be worn on the user's wrist, wherein the plurality of neuromuscular sensors is configured to continuously record a plurality of neuromuscular signals from the user's wrist;
   at least one storage device (114) configured to store one or more trained statistical models; and
   at least one computer processor (112) programmed to:

      obtain speech data for the user from the voice interface
      obtain the plurality of neuromuscular signals from the user's wrist using the plurality of neuromuscular sensors;
      provide as an input to the one or more trained statistical models, the plurality of neuromuscular signals or signals derived from the plurality of neuromuscular signals, wherein subsequently a predicted musculoskeletal representation is output from the trained statistical model;
      wherein the predicted musculoskeletal representation comprises a set of probabilities that the user is performing one or more movements, forces, poses, gestures, and/or activations from a set of possible movements, forces, poses, gestures, and/or activations;
      determine based, at least in part, on an output of the one or more trained statistical models, at least one instruction for modifying an operation of a speech recognizer; and
      provide the at least one instruction to the speech recognizer;
      wherein the instruction for modifying the operation of the speech recognizer is determined based on the predicted musculoskeletal representation.

2. The computerized system of claim 1, further comprising:
   a communications interface configured to provide the at least one instruction from the at least one computer processor (112) to the speech recognizer, wherein the at least one computer processor is programmed to execute the speech recognizer.

3. The computerized system of claim 1, wherein the operation of the speech recognizer comprises selecting at least a portion of text output by the speech recognizer, modifying the at least a portion of text output by the speech recognizer, or altering a mode of the speech recognizer;
   wherein modifying the at least a portion of text output by the speech recognizer comprises modifying a punctuation, a spelling, and/or a formatting of the at least a portion of text output by the speech recognizer; and/or wherein altering the mode of the speech recognizer comprises altering a language mode or a caps lock mode of the speech recognizer.

4. The computerized system of claim 1, wherein the musculoskeletal representation relates to a time subsequent to text being output by the speech recognizer;
   wherein the musculoskeletal representation corresponds to a selection of at least a portion of the text output by the speech recognizer.

5. The computerized system of claim 1, wherein the musculoskeletal representation relates to substantially a same time as audio input being provided to the speech recognizer;
   wherein the musculoskeletal representation corresponds to a modification of at least a portion of text output by the speech recognizer based on the audio input.

6. The computerized system of claim 1, wherein the musculoskeletal representation relates to a time prior to or subsequent to audio input being provided to the speech recognizer;
   wherein the musculoskeletal representation corresponds to altering a mode of the speech recognizer.

7. A computer implemented method for using neuromuscular information to improve speech recognition, the method comprising:

   providing, using at least one computer processor, as an input to one or more trained statistical models, a plurality of neuromuscular signals or signals derived from the plurality of neuromuscular signals, wherein the plurality of neuromuscular signals is received from a plurality of neuromuscular sensors arranged on one or more wearable devices that are configured to be worn on a user's wrist, wherein the plurality of neuromuscular sensors is configured to continuously record the plurality of neuromuscular signals from the user's wrist;

wherein subsequently a predicted musculoskeletal representation is output from the trained statistical model; wherein the predicted musculoskeletal representation comprises a set of probabilities that the user is performing one or more movements, force, poses, gestures and/or activations from a set of possible movements, forces, poses, gestures, and/or activations;

providing, using at least one computer processor, speech data for the user obtained from at least one voice interface that is configured to capture speech data produced by the user;

determining, using the at least one computer processor, based, at least in part, on an output of the one or more trained statistical models, at least one instruction for modifying an operation of a speech recognizer; and

providing, using the at least one computer processor, the at least one instruction to the speech recognizer; wherein the instruction for modifying the operation of the speech recognizer is determined based on the predicted musculoskeletal representation.

8. The method of claim 7, further comprising:
providing, using a communications interface, the at least one instruction from the at least one computer processor to the speech recognizer, wherein the at least one computer processor is programmed to execute the speech recognizer.

9. The method of claim 7, wherein the operation of the speech recognizer comprises selecting at least a portion of text output by the speech recognizer, modifying the at least a portion of text output by the speech recognizer, or altering a mode of the speech recognizer;

wherein modifying the at least a portion of text output by the speech recognizer comprises modifying a punctuation, a spelling, and/or a formatting of the at least a portion of text output by the speech recognizer; and/or wherein altering the mode of the speech recognizer comprises altering a language mode or a caps lock mode of the speech recognizer.

10. The method of claim 7, wherein the musculoskeletal representation relates to a time subsequent to text being output by the speech recognizer;
wherein the musculoskeletal representation corresponds to a selection of at least a portion of the text output by the speech recognizer.

11. The method of claim 7, wherein the musculoskeletal representation relates to substantially a same time as audio input being provided to the speech recognizer;
wherein the musculoskeletal representation corresponds to a modification of at least a portion of text output by the speech recognizer based on the audio input.

12. The method of claim 7, wherein the musculoskeletal representation relates to a time prior to or subsequent to audio input being provided to the speech recognizer;
wherein the musculoskeletal representation corresponds to altering a mode of the speech recognizer.


**Patentansprüche**

1. Ein computerbasiertes System (100) zur Verwendung von neuromuskulären Informationen zur Verbesserung von Spracherkennung, wobei das System Folgendes beinhaltet:

mindestens eine stimmliche Schnittstelle (120), die konfiguriert ist, um von einem Benutzer produzierte Sprachdaten zu erfassen;
eine Vielzahl von neuromuskulären Sensoren (110, 502), die an einer oder mehreren tragbaren Vorrichtungen (504) angeordnet sind, die konfiguriert sind, um an dem Handgelenk des Benutzers getragen zu werden, wobei die Vielzahl von neuromuskulären Sensoren konfiguriert ist, um eine Vielzahl von neuromuskulären Signalen von dem Handgelenk des Benutzers kontinuierlich aufzuzeichnen;
mindestens eine Speichervorrichtung (114), die konfiguriert ist, um ein oder mehrere trainierte statistische Modelle zu speichern; und
mindestens einen Computerprozessor (112), der für Folgendes programmiert ist:

Erhalten von Sprachdaten für den Benutzer von der stimmlichen Schnittstelle, Erhalten der Vielzahl von neuromuskulären Signalen von dem Handgelenk des Benutzers unter Verwendung der Vielzahl von neuromuskulären Sensoren;

Bereitstellen der Vielzahl von neuromuskulären Signalen oder von der Vielzahl von neuromuskulären Signalen abgeleiteter Signale als eine Eingabe in das eine oder die mehreren trainierten statistischen Modelle, wobei im Anschluss eine vorhergesagte muskuloskelettale Darstellung aus dem trainierten statistischen Modell ausgegeben wird;

wobei die vorhergesagte muskuloskelettale Darstellung einen Satz Wahrscheinlichkeiten beinhaltet, dass der Benutzer eine oder mehrere Bewegungen, Kräfte, Posituren, Gesten und/oder Aktivierungen aus einem Satz möglicher Bewegungen, Kräfte, Posituren, Gesten und/oderAktivierungen ausübt;

Bestimmen, basierend mindestens teilweise auf einer Ausgabe des einen oder der mehreren trainierten statistischen Modelle, mindestens einer Anweisung zum Modifizieren einer Operation eines Spracherkenners; und

Bereitstellen der mindestens einen Anweisung für den Spracherkenner;

wobei die Anweisung zum Modifizieren der Operation des Spracherkenners basierend auf der vorhergesagten muskuloskelettalen Darstellung bestimmt wird.

2. Computerbasiertes System gemäß Anspruch 1, das ferner Folgendes beinhaltet: eine Kommunikationsschnittstelle, die konfiguriert ist, um die mindestens eine Anweisung von dem mindestens einen Computerprozessor (112) für den Spracherkenner bereitzustellen, wobei der mindestens eine Computerprozessor programmiert ist, um den Spracherkenner auszuführen.

3. Computerbasiertes System gemäß Anspruch 1, wobei die Operation des Spracherkenners das Auswählen mindestens eines Teils von Text, der durch den Spracherkenner ausgegeben wird, das Modifizieren des mindestens einen Teils von Text, der durch den Spracherkenner ausgegeben wird, oder das Ändern eines Modus des Spracherkenners beinhaltet;

wobei das Modifizieren des mindestens einen Teils von Text, der durch den Spracherkenner ausgegeben wird, das Modifizieren einer Zeichensetzung, einer Schreibweise und/oder einer Formatierung des mindestens einen Teils von Text, der durch den Spracherkenner ausgegeben wird, beinhaltet; und/oder wobei das Ändern des Modus des Spracherkenners das Ändern eines Sprachenmodus oder eines Feststelltaste-Modus des Spracherkenners beinhaltet.

4. Computerbasiertes System gemäß Anspruch 1, wobei sich die muskuloskelettale Darstellung auf einen Zeitpunkt nach dem Ausgeben von Text durch den Spracherkenner bezieht;

wobei die muskuloskelettale Darstellung einer Auswahl mindestens eines Teils des Texts, der durch den Spracherkenner ausgegeben wird, entspricht.

5. Computerbasiertes System gemäß Anspruch 1, wobei sich die muskuloskelettale Darstellung auf einen im Wesentlichen gleichen Zeitpunkt bezieht, zu dem dem Spracherkenner eine Audioeingabe bereitgestellt wird;

wobei die muskuloskelettale Darstellung einer Modifizierung mindestens eines Teils von Text, der durch den Spracherkenner basierend auf der Audioeingabe ausgegeben wird, entspricht.

6. Computerbasiertes System gemäß Anspruch 1, wobei sich die muskuloskelettale Darstellung auf einen Zeitpunkt vor oder nach dem Bereitstellen einer Audioeingabe für den Spracherkenner bezieht;

wobei die muskuloskelettale Darstellung dem Ändern eines Modus des Spracherkenners entspricht.

7. Ein computerimplementiertes Verfahren zur Verwendung von neuromuskulären Informationen zur Verbesserung von Spracherkennung, wobei das Verfahren Folgendes beinhaltet:

Bereitstellen, unter Verwendung mindestens eines Computerprozessors, einer Vielzahl von neuromuskulären Signalen oder von der Vielzahl von neuromuskulären Signalen abgeleiteter Signale als eine Eingabe in ein oder mehrere trainierte statistische Modelle, wobei die Vielzahl von neuromuskulären Signalen von einer Vielzahl von neuromuskulären Sensoren empfangen wird, die an einer oder mehreren tragbaren Vorrichtungen angeordnet sind, die konfiguriert sind, um an einem Handgelenk eines Benutzers getragen zu werden, wobei die Vielzahl von neuromuskulären Sensoren konfiguriert ist, um die Vielzahl von neuromuskulären Signalen von dem Handgelenk des Benutzers kontinuierlich aufzuzeichnen;

wobei im Anschluss eine vorhergesagte muskuloskelettale Darstellung aus dem trainierten statistischen Modell ausgegeben wird;

wobei die vorhergesagte muskuloskelettale Darstellung einen Satz Wahrscheinlichkeiten beinhaltet, dass der Benutzer eine oder mehrere Bewegungen, Kräfte, Posituren, Gesten und/oder Aktivierungen aus einem Satz möglicher Bewegungen, Kräfte, Posituren, Gesten und/oder Aktivierungen ausübt;

Bereitstellen, unter Verwendung mindestens eines Computerprozessors, von Sprachdaten für den Benutzer, die von mindestens einer stimmlichen Schnittstelle erhalten werden, die konfiguriert ist, um durch den Benutzer produzierte Sprachdaten zu erfassen;

Bestimmen, unter Verwendung des mindestens einen Computerprozessors, basierend mindestens teilweise auf einer Ausgabe des einen oder der mehreren trainierten statistischen Modelle, mindestens einer Anweisung zum Modifizieren einer Operation eines Spracherkenners; und

Bereitstellen, unter Verwendung des mindestens einen Computerprozessors, der mindestens einen Anweisung für den Spracherkenner;

wobei die Anweisung zum Modifizieren der Operation des Spracherkenners basierend auf der vorhergesagten muskuloskelettalen Darstellung bestimmt wird.

8. Verfahren gemäß Anspruch 7, das ferner Folgendes beinhaltet:
Bereitstellen, unter Verwendung einer Kommunikationsschnittstelle, der mindestens einen Anweisung von dem mindestens einen Computerprozessor für den Spracherkenner, wobei der mindestens eine Computerprozessor programmiert ist, um den Spracherkenner auszuführen.

9. Verfahren gemäß Anspruch 7, wobei die Operation des Spracherkenners das Auswählen mindestens eines Teils von Text, der durch den Spracherkenner ausgegeben wird, das Modifizieren des mindestens einen Teils von Text, der durch den Spracherkenner ausgegeben wird, oder das Ändern eines Modus des Spracherkenners beinhaltet;
wobei das Modifizieren des mindestens einen Teils von Text, der durch den Spracherkenner ausgegeben wird, das Modifizieren einer Zeichensetzung, einer Schreibweise und/oder einer Formatierung des mindestens einen Teils von Text, der durch den Spracherkenner ausgegeben wird, beinhaltet; und/oder wobei das Ändern des Modus des Spracherkenners das Ändern eines Sprachenmodus oder eines Feststelltaste-Modus des Spracherkenners beinhaltet.

10. Verfahren gemäß Anspruch 7, wobei sich die muskuloskelettale Darstellung auf einen Zeitpunkt nach dem Ausgeben von Text durch den Spracherkenner bezieht;
wobei die muskuloskelettale Darstellung einer Auswahl mindestens eines Teils des Texts, der durch den Spracherkenner ausgegeben wird, entspricht.

11. Verfahren gemäß Anspruch 7, wobei sich die muskuloskelettale Darstellung auf einen im Wesentlichen gleichen Zeitpunkt bezieht, zu dem dem Spracherkenner eine Audioeingabe bereitgestellt wird;
wobei die muskuloskelettale Darstellung einer Modifizierung mindestens eines Teils von Text, der durch den Spracherkenner basierend auf der Audioeingabe ausgegeben wird, entspricht.

12. Verfahren gemäß Anspruch 7, wobei sich die muskuloskelettale Darstellung auf einen Zeitpunkt vor oder nach dem Bereitstellen einer Audioeingabe für den Spracherkenner bezieht;
wobei die muskuloskelettale Darstellung dem Ändern eines Modus des Spracherkenners entspricht.


**Revendications**

1. Un système informatisé (100) pour l'utilisation d'informations neuromusculaires afin d'améliorer la reconnaissance de la parole, le système comprenant :

au moins une interface vocale (120) configurée pour capturer des données de parole produites par un utilisateur ;
une pluralité de capteurs neuromusculaires (110, 502), agencés sur un ou plusieurs dispositifs vestimentaires (504) qui sont configurés pour être portés sur le poignet de l'utilisateur, la pluralité de capteurs neuromusculaires étant configurés pour enregistrer de façon continue une pluralité de signaux neuromusculaires provenant du poignet de l'utilisateur ;
au moins un dispositif de stockage (114) configuré pour stocker un ou plusieurs modèles statistiques entraînés ; et
au moins un processeur d'ordinateur (112) programmé pour:

obtenir des données de parole pour l'utilisateur auprès de l'interface vocale ;

obtenir la pluralité de signaux neuromusculaires provenant du poignet de l'utilisateur en utilisant la pluralité de capteurs neuromusculaires ;

fournir comme entrée aux un ou plusieurs modèles statistiques entraînés, la pluralité de signaux neuromusculaires ou des signaux dérivés de la pluralité de signaux neuromusculaires, une représentation musculosquelettique prédite étant postérieurement délivrée par le modèle statistique entraîné ;

la représentation musculosquelettique prédite comprenant un ensemble de probabilités que l'utilisateur soit en train d'effectuer un·e ou plusieurs mouvements, forces, poses, gestes, et/ou activations parmi un ensemble de mouvements, de forces, de poses, de gestes, et/ou d'activations possibles ;

déterminer sur la base, au moins en partie, d'une sortie des un ou plusieurs modèles statistiques entraînés, au moins une instruction pour la modification d'une opération d'un reconnaisseur de parole ; et

fournir l'au moins une instruction au reconnaisseur de parole ;

dans lequel l'instruction pour la modification d'une opération du reconnaisseur de parole est déterminée sur la base de la représentation musculosquelettique prédite.

2. Le système informatisé de la revendication 1, comprenant en outre :
une interface de communication configurée pour fournir l'au moins une instruction provenant de l'au moins un processeur d'ordinateur (112) au reconnaisseur de parole, l'au moins un processeur d'ordinateur étant programmé pour exécuter le reconnaisseur de parole.

3. Le système informatisé de la revendication 1, dans lequel l'opération du reconnaisseur de parole comprend la sélection d'au moins une portion de texte délivré par le reconnaisseur de parole, la modification de l'au moins une portion de texte délivré par le reconnaisseur de parole, ou le changement d'un mode du reconnaisseur de parole ; dans lequel la modification de l'au moins une portion de texte délivré par le reconnaisseur de parole comprend la modification d'une ponctuation, d'une orthographe, et/ou d'un formatage de l'au moins une portion de texte délivré par le reconnaisseur de parole ; et/ou dans lequel le changement du mode du reconnaisseur de parole comprend le changement d'un mode Langue ou d'un mode Verrouillage des majuscules du reconnaisseur de parole.

4. Le système informatisé de la revendication 1, dans lequel la représentation musculosquelettique se rapporte à un instant postérieur à celui où du texte est délivré par le reconnaisseur de parole ; dans lequel la représentation musculosquelettique correspond à une sélection d'au moins une portion du texte délivré par le reconnaisseur de parole.

5. Le système informatisé de la revendication 1, dans lequel la représentation musculosquelettique se rapporte à un instant substantiellement identique à celui où une entrée audio est fournie au reconnaisseur de parole ; dans lequel la représentation musculosquelettique correspond à une modification d'au moins une portion de texte délivré par le reconnaisseur de parole sur la base de l'entrée audio.

6. Le système informatisé de la revendication 1, dans lequel la représentation musculosquelettique se rapporte à un instant antérieur ou postérieur à celui où une entrée audio est fournie au reconnaisseur de parole ; dans lequel la représentation musculosquelettique correspond au changement d'un mode du reconnaisseur de parole.

7. Un procédé mis en oeuvre par ordinateur pour l'utilisation d'informations neuromusculaires afin d'améliorer la reconnaissance de la parole, le procédé comprenant :

la fourniture, en utilisant au moins un processeur d'ordinateur, comme entrée à un ou plusieurs modèles statistiques entraînés, d'une pluralité de signaux neuromusculaires ou de signaux dérivés de la pluralité de signaux neuromusculaires, la pluralité de signaux neuromusculaires étant reçus d'une pluralité de capteurs neuromusculaires agencés sur un ou plusieurs dispositifs vestimentaires qui sont configurés pour être portés sur le poignet d'un utilisateur, la pluralité de capteurs neuromusculaires étant configurés pour enregistrer de façon continue la pluralité de signaux neuromusculaires provenant du poignet de l'utilisateur ;

une représentation musculosquelettique prédite étant postérieurement délivrée par le modèle statistique entraîné ;

la représentation musculosquelettique prédite comprenant un ensemble de probabilités que l'utilisateur soit en train d'effectuer un·e ou plusieurs mouvements, forces, poses, gestes et/ou activations parmi un ensemble de mouvements, de forces, de poses, de gestes, et/ou d'activations possibles ;

la fourniture, en utilisant au moins un processeur d'ordinateur, de données de parole pour l'utilisateur obtenues auprès d'au moins une interface vocale qui est configurée pour capturer des données de parole produites par l'utilisateur ;

la détermination, en utilisant l'au moins un processeur d'ordinateur, sur la base, au moins en partie, d'une sortie des un ou plusieurs modèles statistiques entraînés, d'au moins une instruction pour la modification d'une opération d'un reconnaisseur de parole ; et

la fourniture, en utilisant l'au moins un processeur d'ordinateur, de l'au moins une instruction au reconnaisseur de parole ;

dans lequel l'instruction pour la modification de l'opération du reconnaisseur de parole est déterminée sur la base de la représentation musculosquelettique prédite.

8. Le procédé de la revendication 7, comprenant en outre :
la fourniture, en utilisant une interface de communication, de l'au moins une instruction provenant de l'au moins un processeur d'ordinateur au reconnaisseur de parole, l'au moins un processeur d'ordinateur étant programmé pour exécuter le reconnaisseur de parole.

9. Le procédé de la revendication 7, dans lequel l'opération du reconnaisseur de parole comprend la sélection d'au moins une portion de texte délivré par le reconnaisseur de parole, la modification de l'au moins une portion de texte délivré par le reconnaisseur de parole, ou le changement d'un mode du reconnaisseur de parole ;

dans lequel la modification de l'au moins une portion de texte délivré par le reconnaisseur de parole comprend la modification d'une ponctuation, d'une orthographe, et/ou d'un formatage de l'au moins une portion de texte délivré par le reconnaisseur de parole ; et/ou

dans lequel le changement du mode du reconnaisseur de parole comprend le changement d'un mode Langue ou d'un mode Verrouillage des majuscules du reconnaisseur de parole.

10. Le procédé de la revendication 7, dans lequel la représentation musculosquelettique se rapporte à un instant postérieur à celui où du texte est délivré par le reconnaisseur de parole ;

dans lequel la représentation musculosquelettique correspond à une sélection d'au moins une portion du texte délivré par le reconnaisseur de parole.

11. Le procédé de la revendication 7, dans lequel la représentation musculosquelettique se rapporte à un instant substantiellement identique à celui où une entrée audio est fournie au reconnaisseur de parole ;

dans lequel la représentation musculosquelettique correspond à une modification d'au moins une portion de texte délivré par le reconnaisseur de parole sur la base de l'entrée audio.

12. Le procédé de la revendication 7, dans lequel la représentation musculosquelettique se rapporte à un instant antérieur ou postérieur à celui où une entrée audio est fournie au reconnaisseur de parole ;

dans lequel la représentation musculosquelettique correspond au changement d'un mode du reconnaisseur de parole.

FIG. 1

200

202
RECORD SPEECH DATA

204
DETERMINE MUSCULO-SKELETAL
REPRESENTATION OF THE USER

206
MODIFY SPEECH
RECOGNITION PROCESS

208
RESUME SPEECH RECOGNITION

FIG. 2

300

```
┌─────────────────────────┐
│    RECEIVE SPEECH       │ ─── 310
│  RECOGNITION RESULTS    │
└─────────────────────────┘
            │
            ▼
┌─────────────────────────┐
│   RECEIVE SENSOR DATA   │ ─── 312
└─────────────────────────┘
            │
            ▼
┌─────────────────────────┐
│    DETERMINE EDIT/      │
│  CORRECT OPERATION      │ ─── 314
│  BASED ON SENSOR DATA   │
└─────────────────────────┘
            │
            ▼
┌─────────────────────────┐
│    PERFORM EDIT/        │ ─── 316
│  CORRECTION OPTION      │
└─────────────────────────┘
```

# FIG. 3

400

MONITOR FOR EMG-
BASED CONTROL
INFORMATION ⟋ 410

↓

EMG-BASED
CONTROL
INFORMATION
DETECTED? ⟋ 412

NO

YES

↓

PERFORM ACTION
ASSOCIATED WITH
SPEECH RECOGNITION ⟋ 414

FIG. 4

552 — RECORD SENSOR DATA

562 — RECORD SPEECH DATA

554 — PROCESS SENSOR DATA

564 — PROCESS SPEECH DATA

500

570 — INPUT SENSOR/ SPEECH DATA TO INFERENCE MODEL(S)

580 — DETERMINE MODEL ESTIMATES

FIG. 5

FIG. 6

FIG. 7

EP 3 791 387 B1

FIG. 8

900

INPUT SENSOR DATA TO
TRAINED INFERENCE
MODEL(S) — 910

DETERMINE ONE OR
MORE CHARACTERS
BASED ON MODEL
OUTPUT — 912

IS
CONFIDENCE
SCORE FOR DETERMINED
CHARACTER(S) BELOW A
THRESHOLD? — 914

NO

YES

EXECUTE AUTOCORRECT
ROUTINE — 916

RECEIVE PREDICTION
THAT ONE OR MORE OF
THE DETERMINED
CHARACTER(S) IS
INCORRECT — 918

PRESENT TO USER A
PROMPT WITH THE
PREDICTION — 920

DID
USER ACCEPT
PROMPT? — 922

NO

YES

UPDATE TRAINED
INFERENCE MODEL(S)
BASED ON USER
INDICATION — 924

FIG. 9

1000

INPUT SENSOR DATA TO
TRAINED INFERENCE
MODEL(S) — 1010

DETERMINE ONE OR
MORE CHARACTERS
BASED ON MODEL
OUTPUT — 1012

RECEIVE USER INPUT
INDICATING THAT ONE OR
MORE OF THE
DETERMINED
CHARACTER(S) IS
INCORRECT — 1014

UPDATE TRAINED
INFERENCE MODEL(S)
BASED ON USER
INDICATION — 1016

FIG. 10

1120

1130

1110

FIG. 11A

1120

1130

1110

FIG. 11B

*FIG. 12A*

*FIG. 12B*

**REFERENCES CITED IN THE DESCRIPTION**

**Patent documents cited in the description**

- US 9182826 B2
- WO 2015100172 A1